# EUROPEAN PATENT SPECIFICATION

(11) **EP 3 544 445 B1**
(45) Date of publication and mention of the grant of the patent: **13.05.2020**
(21) Application number: 17801478.3
(22) Date of filing: 24.11.2017
(51) Int. Cl.: A23D 7/005, A23L 27/60

(54) **FOOD COMPOSITIONS CONTAINING VEGETABLE OIL AND MIXTURE WITH STABILISING PROPERTIES**
LEBENSMITTELZUSAMMENSETZUNGEN MIT PFLANZLICHEM ÖL UND MISCHUNG MIT STABILISIERENDEN EIGENSCHAFTEN
COMPOSITIONS ALIMENTAIRES CONTENANT DE L'HUILE VÉGÉTALE ET UN MÉLANGE À PROPRIÉTÉS STABILISANTES

(30) Priority: 25.11.2016 EP 16200705
(43) Date of publication of application: 02.10.2019
(73) Proprietor: Unilever N.V., 3013 AL Rotterdam (NL); Unilever PLC, London, Greater London EC4Y 0DY (GB)
(72) Inventor: EGGERS, Marcus, 37603 Holzminden (DE); ERMACORA, Alessia, 3133AT Vlaardingen (NL); KINDEL, Günter, Georg, 37603 Holzminden (DE); KOHLENBERG, Birgit, Hanna, Elfriede, 37603 Holzminden (DE); KRAMMER, Gerhard, Eduard, 37603 Holzminden (DE); SCHULZE, Nicole, Marita, 37603 Holzminden (DE); SICART, Julie, Aline, Michele, 3133 AT Vlaardingen (NL); STÜRTZ, Melanie, 37603 Holzminden (DE); TIJSSEN, Renske, Leonarda, Margriet, 3133 AT Vlaardingen (NL)
(74) Representative: Fijnvandraat, Arnoldus
(86) International application number: PCT/EP2017/080328
(87) International publication number: WO 2018/096092

(56) References cited:
- WO-A1-2016/053971
- US-A- 4 963 385
- US-A1- 2010 197 812
- US-A1- 2011 280 950
- US-A1- 2012 263 850
- US-A1- 2014 154 377
- SAINSBURY JEANINE ET AL: "The effects of antioxidants and shelf life conditions on oxidation markers in a sunflower oil salad dressing emulsion (SOSDE)", FOOD CHEMISTRY, ELSEVIER LTD, NL, vol. 213, 24 June 2016 (2016-06-24), pages 230-237, XP029651989, ISSN: 0308-8146, DOI: 10.1016/J.FOODCHEM.2016.06.081
- CAROLYN N RASMUSSEN ET AL: "Selection and Use of Honey as an Antioxidant in a French Salad Dressing System", JOURNAL OF AGRICULTURAL AND FOOD CHEMISTRY, AMERICAN CHEMICAL SOCIETY, US, vol. 56, no. 18, 30 August 2008 (2008-08-30), pages 8650-8657, XP008149187, ISSN: 0021-8561, DOI: 10.1021/JF800635D
- NATELLA FAUSTA ET AL: "Benzoic and cinnamic acid derivatives as antioxidants: Structure-activity relation", JOURNAL OF AGRICULTURAL AND FOOD CHEMISTRY, vol. 47, no. 4, April 1999 (1999-04), pages 1453-1459, XP002767622, ISSN: 0021-8561
- WOJTUNIK KAROLINA A ET AL: "Model Studies on the Antioxidant Activity of Common Terpenoid Constituents of Essential Oils by Means of the 2,2-Diphenyl-1-picrylhydrazyl Method", JOURNAL OF AGRICULTURAL AND FOOD CHEMISTRY, vol. 62, no. 37, September 2014 (2014-09), pages 9088-9094, XP002767623, cited in the application

## Description

### FIELD OF THE INVENTION

The present invention relates to food compositions containing vegetable oil comprising mono-unsaturated and/or poly-unsaturated fatty acids, further containing a mixture with stabilising properties. The invention further relates to use of that mixture to reduce the oxidation of vegetable oil comprising mono-unsaturated and/or poly-unsaturated fatty acids.

### BACKGROUND TO THE INVENTION

Generally vegetable oils that are used in food compositions contain mono-unsaturated or poly-unsaturated fatty acids. In particular the double bonds in these fatty acids leads to sensitivity for oxidation. This may lead to the generation of oxidation products which may negatively affect the food composition, as these products may lead to unpleasant or undesired sensorial impressions, like bad smell and bad taste. These oxidation processes may be promoted by long storage of food products, the use of sensitive ingredients, metal content of certain ingredients which may promote oxidation, etcetera. The oxidative degradation of vegetable oil therefore often leads to decreasing value of food products. A common ingredient to reduce the oxidation of vegetable oil often is EDTA, ethylene diamine tetra acetic acid. This compound chelates metal ions, like iron, and therewith prevents that the metal ion can catalyse the oxidation process of the fatty acid in the vegetable oil. EDTA is very effective, however it is also perceived by the consumer to be chemical. As consumers strive to eat natural food products, there is a strive among food producers to remove compounds which are considered to be chemical from food products.

WO 2013/189709 A1 relates to a method of production of an EDTA-free mayonnaise by means of using a combination of reduced grape juice, acetic acid and proteins, whereby tartaric acid and malic acid as well as glucose and fructose are disclosed as components of the reduced grape juice. This described combination serves as EDTA-substitute and has oxidation-stabilising properties.

K.A. Woijtunik et al. (Journal of Agriculture and Food Chemistry, 2014, 62, p.9088-9094) discloses monoterpenes as antioxidants, particularly pulegone, citral, gamma-terpinene, myrcene and alpha-phellandrene.

US 2010/197812 A1 relates to compositions and methods for enhancing the stability foods, beverages, nutritional supplements and cosmetics. An O/W emulsion is disclosed, in which the antioxidant is rosemary containing rosmarinic acid or combination of this with spent clove extract.

US 4 963 385 relates to food emulsions containing highly unsaturated fatty acids or derivatives thereof, and that are stabilized against oxidative attack upon the unsaturated components by using a stabilizer system in the water phase of the emulsion which comprises either a sugar or sugar alcohol or a sugar or sugar alcohol (e.g. raffinose, trehalose, and sorbitol) and a metal-ion chelator (e.g. EDTA).

J.Sainsbury et al. (Food Chemistry, 213, 2016, p.230-237) relates to the effects of levels of antioxidant [gallic acid or EDTA] in a sunflower oil salad dressing emulsion and shelf life affecting conditions on aroma, anisidine values (AV) and peroxide values (PV).

WO 2016/053971 A1 relates to a stabilized oil including an edible oil and an antioxidant composition comprising alpha-lipoic acid, and additionally at least one of ascorbic acid, ascorbyl palmitate, green tea extract, lecithin and rosemary extract.

US 2014/154377 A1 relates to stable oil-in-water emulsions comprising a polyunsaturated fatty acid, an emulsifier, water, a metal chelating agent, and an antioxidant. The metal chelating agent is selected from EDTA, citric acid, citrate, tartaric acid, ascorbic acid, phosphoric acid, a polyphenol, a pyrophosphate, a hexametaphosphate, whey, casein and combinations thereof. The antioxidant is selected from vitamin C, vitamin E (tocopherols), a polyphenol, a phenol derivative, carnosic acid, lipoic acid, taurine, an aromatic carboxylic acid, salts of an aromatic carboxylic acid, and combinations thereof.

US 2011/280950 A1 relates to antioxidant compositions for the stabilization of fat sources against oxidation; in particular including quercetin.

US 2012/263850 A1 provides a foodstuff in the form of a spread, wherein the spread is a water in oil emulsion containing an anti-oxidant composition comprising a) an extract obtained from or obtainable from a plant of the Labiatae family, and b) an extract obtained from or obtainable from a plant of the genus *Matricaria* or of the genus *Chamaemelum.*

C.N.Rasmussen et al. (Journal Of Agricultural And Food Chemistry 56(18), 2008, p.8650-8657) discloses that salad dressings incorporating honey provide protection against oxidation to a degree similar to that of EDTA.

F.Natella et al. (Journal Of Agricultural And Food Chemistry, 47(4), 1999, p.1453-1459) relates to the antioxidant activity of four derivatives of benzoic acid and comparing this with the activity of the four homologous derivatives of cinnamic acid.

Further documents relating to or disclosing stabilizing or antioxidant activites of selected compounds include M.S. Brewer (Comprehensive Reviews In Food Science And Food Safety, 10(4), 2011, p.221-247);
US 2002/176882 A1;
A.Z.M. Badee et al (Journal Of Applied Sciences Research, 9(11), 2013, p.5718-5729; WO 2013/093730 A1; and
WO 2008/005548 A2.

### SUMMARY OF THE INVENTION

Common methods for counteracting oxidative degradation processes and autoxidative processes, in particular in food products containing vegetable oils with mono- or polyunsaturated fatty acids, therefore are often based on the use of EDTA or antioxidants. Since the use of EDTA is regulated and only possible conditionally, there is an ongoing strong interest in alternative solutions to decrease or to avoid the oxidative degradation processes and autoxidative processes, respectively, and thereby the formation of substances causing undesired flavours and/or tastes and/or other disadvantageous effects. Moreover, consumers are more and more interested in food products which do not contain compounds which can be considered to be chemical or artificial.

Therefore, the primary objective of the invention is to provide food products containing vegetable oil, which contain one or more compounds that decrease oxidation rate of vegetable oil, and therewith avoid or slow-down the formation of undesired flavours and/or tastes that are formed or have formed during oxidative degradation processes. More in particular it is an objective of the present invention to provide a food composition which is free or nearly free from EDTA, and that contains one or more compounds that do not give an undesired colour or flavour or taste to the food composition, and that do not have negative chemical perception of the consumer.

These objectives have been met by using a combination of compounds which can be obtained from natural sources and which can be used to at least partly replace EDTA, and which lead to reduced oxidation of vegetable oils in food compositions.

Accordingly in a first aspect the invention provides a food composition comprising vegetable oil comprising mono-unsaturated and/or poly-unsaturated fatty acids, wherein the concentration of the vegetable oil ranges from 5% to 85% by weight of the composition, further comprising a mixture comprising or consisting of:
a) 0.0001 to 80% by weight of the mixture of one or more monocyclic monoterpenes of formula (I) 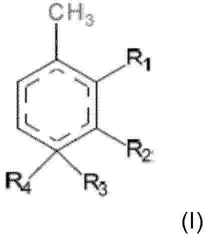 with R1 = hydrogen, hydroxy group or carbonyl group, R2 = hydrogen, hydroxy group or carbonyl group, R3 = 0, hydrogen or hydroxy group (according to one alternative, R3 is not present) and R4 = isopropyl group, isopropenyl group or isopropylidene group as well as without or with one, two or three double bonds in the cyclic system,
   preferably selected from the group consisting of gamma-terpinene, alpha-terpinene, beta-terpinene, beta-phellandrene, limonene, thymol, pulegone, carvacrol and alpha-phellandrene,
b) 0.0001 to 1.5% by weight of the mixture of one or more benzoic acid derivatives of formula (II) 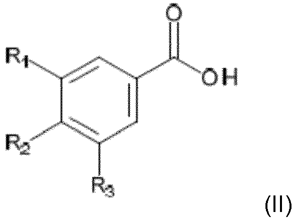 with R1, R2 and R3 independently of each other selected from the group consisting of hydrogen, hydroxy group and methoxy group,
c) 0.0001 to 3% by weight of the mixture of a first 3-phenylpropenoic acid derivative of formula (IV) 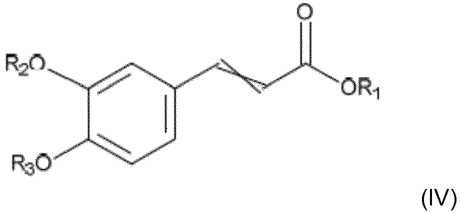 with R1 = 1-carboxy-2-(3,4-dihydroxyphenyl)ethyl, R2 = hydrogen and R3 = hydrogen, optionally a second 3-phenylpropenoic acid derivative of formula (IV) with R1 = 5-carboxy-2,3,5-trihydroxycyclohexyl, R2 = hydrogen and R3 = hydrogen, and
   optionally a third 3-phenylpropenoic acid derivative of formula (IV) with R1 = hydrogen, R2 = hydrogen and R3 = hydrogen,
d) 0.005 to 10% by weight of the mixture of tartaric acid (formula (V)) D-(-)-form, and/or L-(+)-form, and/or meso-form 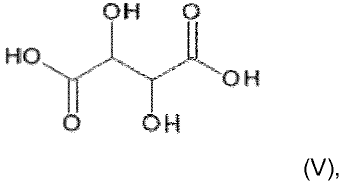
e) 0.005 to 10% by weight of the mixture of citric acid (formula (VI)) and/or malic acid (formula (VII)) 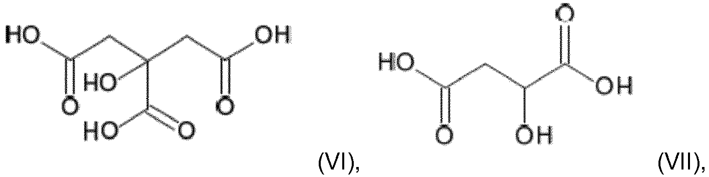
f) 0.000005 to 25% by weight of the mixture of glucose, fructose and/or sucrose,
g) 0.0001 to 98% by weight of the mixture of 1,2-propanediol and/or 1,3-propanediol and/or propane-1,2,3-triol,
h) 0.0005 to 95% by weight of the mixture of water,
i) optionally 0.0001 to 1 wt% by weight of the mixture of gallocatechin (formula (III)) (2R,3S)-3,4-dihydro-2-(3,4,5-trihydroxyphenyl)-2H-1-benzopyran-5 3,5,7-triol 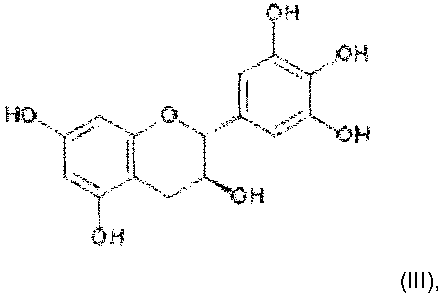
j) optionally 0.005 to 95% by weight of the mixture of one or more further flavouring substances, and
k) optionally 0.01 to 95% by weight of the mixture of one or more further solvents, preferably selected from the group consisting of triacetin (TRI), isopropanol (iPr), isopropyl myristate (IPM), ethanol, dipropylene glycol (DPG) and triethyl citrate (TEC).

In a second aspect, the present invention provides the use of a mixture as defined in the context of the first aspect of the invention in a composition comprising vegetable oil comprising mono-unsaturated or poly-unsaturated fatty acids, to reduce the oxidation rate of the vegetable oil.

Such mixture used in the composition of the invention demonstrates particularly advantageous stabilizing properties and oxidation-decelerating, oxidation-inhibiting or anti-autoxidative effects, respectively, according to the studies carried out within the scope of the present invention. The mixtures according to the invention are particularly well suited to reduce or to avoid altogether undesired flavours and/or tastes that are formed or have formed by oxidative degradation and autoxidation, respectively, or to slow down their formation. Thereby, advantageously a better sensorial durability and stabilization of the preparation containing such substances can be achieved. Additionally, the mixtures according to the invention are thereby widely applicable, particularly as component of specific preparations containing one or more oxidation-sensitive compounds (as described herein). The individual substances of the mixture according to the invention are not able to slow down or to avoid altogether the formation of undesired flavours and/or tastes by oxidative degradation and autoxidation, respectively, over a longer period to the same extent as mixtures according to the invention are able to, so that less undesired degradation products are formed, that can produce unpleasant or undesired sensorial impressions.

### DETAILED DESCRIPTION OF THE INVENTION

All percentages, unless otherwise stated, refer to the percentage by weight (wt%).
D3,3 is the volume weighted geometric mean particle or droplet diameter. D3,2 is the surface-weighted mean diameter (M. Alderliesten, Particle & Particle Systems Characterization 8 (1991) 237-241).
"Spoonable" means that a composition is semi-solid but not free-flowing on a time scale typical for eating a meal, meaning not free-flowing within a time period of an hour. A sample of such substance is able to be dipped with a spoon from a container containing the composition.
Except in the operating and comparative examples, or where otherwise explicitly indicated, all numbers in this description indicating amounts or ratios of material or conditions of reaction, physical properties of materials and/or use are to be understood as modified by the word "about".

In a first aspect, the invention provides a food composition comprising vegetable oil. An edible or a food product in the context of the present invention encompasses, but is not limited to, food products including spreads, salad dressings, dairy products, beverages, dietetic foods, dietary supplements, and others. The products may contain ingredients common in the art and may be made by methods common in the art.

Triacylglycerols (TAG) are the major constituents of natural fats and oils and are esters of glycerol and fatty acids. The chemical structure of the fatty acid and the distribution of the fatty acids over the glycerol backbone determine (at least partly) the physical properties of a fat. The physical properties of fats, like for example the solid fat content (SFC) expressed as N-value, can be modified by altering the chemical structure of the fat. Well known techniques that are widely used include hydrogenation and interesterification.

Edible fats contain a large number of different triacylglycerols (TAGs) with varying physical properties. The TAGs in edible fats are composed of fatty acids with an even number of carbon atoms in the chains, generally varying between 4 and 24 in number. Common fatty acids from vegetable origin are C10, C12, C14, C16, C18, C20 and C22, and most common TAGs are composed of these fatty acids. Moreover, each fatty acid can contain up to three double bonds at certain positions in the chain. The terms 'triacylglycerols', 'TAGs', and 'triglycerides' may be used interchangeably in here. The term 'oil' as used herein refers to lipids selected from triglycerides, diglycerides, monoglycerides and combinations thereof. The terms 'oil' and 'fat' may be used interchangeably herein, and should be regarded to be synonyms. Where applicable the prefix 'liquid' or 'solid' is added to indicate if the fat or oil is liquid or solid at ambient temperature as understood by the person skilled in the art. The term '*structuring fat*' refers to a fat that is solid at ambient temperature. The term '*liquid oil*' refers to an oil that is liquid at ambient temperature.

The mixture used in the composition of the invention, leads to reduced oxidation of the vegetable oil, and therefore the amount of EDTA that is added to the composition can be reduced. Therefore, preferably the concentration of EDTA is lower than 0.005% by weight, preferably lower than 0.002% by weight of the composition. More preferred the concentration of EDTA is lower than 0.001% by weight, more preferred the concentration of EDTA is lower than 0.0005% by weight, and most preferred EDTA is absent from the composition of the invention.

### Mixture used in the Composition of the Invention

The mixture used in the composition of the invention consists of or comprises the compounds mentioned herein before.

Preferably the mixture has an ORAC value of greater than 200 µmol TE/g, with respect to the dry weight of the mixture, preferably of greater than 500 µmol TE/g, particularly preferably of greater than 1000 µmol TE/g, especially preferably of greater than 2000 µmol TE/g.

ORAC stands for Oxygen Radical Absorption Capacity. The ORAC value determines the antioxidative ability or capacity of a substance or a mixture and is given in ORAC units (µmol TE/g) within the scope of the present text. The ORAC value therefore represents a characteristic measure of the antioxidative potential as is described in more detail in WO 2014/147112 A1.

Preferably the mixture has a polyphenol content according to Folin-Ciocalteu of greater than 5%, with respect to the dry weight of the mixture, preferably of greater than 10%, particularly preferably of greater than 15%.

The determination of the ORAC value and of the polyphenol content according to Folin-Ciocalteu took place during studies within the scope of the present invention and therefore also takes place within the scope of the present text generally following "Standardized Methods for the Determination of Antioxidant Capacity and Phenolics in Food and Dietary Supplements" by R.L. Prior et al., Journal of Agriculture and Food Chemistry, 2005, 53, 4290-4302.

Preferably the mixture comprises or consists of, with regard to the total weight of the mixture, respectively,
0.001 to 10 wt% of component a), preferably 0.01 to 5 wt%, especially preferably 0.1 to 1 wt%;
0.001 to 1 wt% of component b), preferably 0.005 to 0.25 wt%, especially preferably 0.01 to 0.1 wt%;
0.001 to 1.5 wt% of component c), preferably 0.005 to 1 wt%, especially preferably 0.01 to 0.7 wt%;
0.0075 to 5 wt% of component d), preferably 0.01 to 3 wt%, especially preferably 0.01 to 0.5 wt%;
0.0075 to 8 wt% of component e), preferably 0.01 to 5 wt%, especially preferably 0.01 to 3 wt%;
0.0000075 to 15 wt% of component f), preferably 0.00001 to 10 wt%, especially preferably 0.00005 to 5 wt%, and most preferably 1 to 5 wt%;
0.0005 to 65 wt% of component g), preferably 0.001 to 45 wt%, especially preferably 0.1 to 35 wt%;
0.005 to 65 wt% of component h), preferably 0.01 to 50 wt%, especially preferably 0.05 to 35 wt%;
0.001 to 0.7 wt% of component i), preferably 0.005 to 0.5 wt%, especially preferably 0.01 to 0.15 wt%;
0.0075 to 50 wt% of component j), preferably 0.01 to 25 wt%, especially preferably 0.05 to 15 wt%;
0.05 to 65 wt% of component k), preferably 0.1 to 45 wt%, especially preferably 1 to 35 wt%.
The respective endpoints of these ranges may be combined to define other preferred ranges.

The mixture is prepared by dissolving the solid ingredients in the solvents water and propylene glycol. If necessary, this preparation can be slightly heated to maximally 40°C until all compounds are dissolved. Then the other ingredients can be added after cooling to room temperature. All ingredients can be obtained from natural sources, and therefore it does not have the negative impression of a chemical that EDTA has.

Preferably the total amount of mixture in the composition ranges from 0.05 to 5 wt%, preferably from 0.1 to 3 wt%, preferably from 0.2 to 1 wt%.

### Oil-in-Water Emulsion

Preferably the composition of the invention is in the form of an oil-in-water emulsion. Examples of oil-in-water emulsions encompassed by the preferred invention include mayonnaise, dressings, salad dressings, and sauces. Preferably, the oil-in-water emulsion is a mayonnaise or a sauce, most preferably a mayonnaise. Preferably the composition of the invention is a low-fat mayonnaise.

Preferably the oil in the context of this oil-in-water emulsion comprises at least 90 wt% of triglycerides, more preferably at least 95 wt%. Preferably the oil contains less than 20 wt% of solid oil at 5°C, preferably less than 10 wt% solid oil. More preferred the oil is free from solid oil at 5°C. Most preferred the oil is liquid at 5°C. Preferred oils for use in the context of this invention are vegetable oils which are liquid at 5°C. Preferably the oil comprises sunflower oil, rapeseed oil, olive oil, soybean oil, and combinations of these oils. The mono-unsaturated fatty acids as comprised in the oil preferably comprise oleic acid. The poly-unsaturated fatty acids as comprised in the oil preferably comprise linoleic acid and linolenic acid.

The concentration of the vegetable oil ranges from 5% to 85% by weight of the composition. Preferably the composition of the invention comprises from 10% to 80% by weight of vegetable oil, preferably from 15% to 75% by weight of oil. Preferably the amount of oil is at least 20% by weight, preferably at least 30% by weight, preferably at least 35% by weight. Preferably the concentration of vegetable oil is maximally 70% by weight, preferably maximally 65%, preferably maximally 60%. Any combination of ranges using these mentioned end points are considered to be part of the invention as well.

In case the preferred oil-in-water emulsion is a low-fat mayonnaise, the amount of oil preferably ranges from 20% to 60% by weight, preferably from 30% to 55% by weight preferably from 35 to 50% by weight of the composition. Generally, such a mayonnaise or low-fat mayonnaise is spoonable. In another preferred embodiment, the oil-in-water emulsion is a salad dressing. Generally, such salad dressing is a pourable liquid. In such case the amount of oil preferably ranges from 5% to 60% by weight, preferably from 10% to 55% by weight preferably from 15 to 50% by weight of the composition. The preferred emulsions typically are pourable or spoonable as opposed to solid. In case the preferred emulsion is non-pourable, it is preferred that the consistency of the emulsion is such that it cannot be cut in two as the parts of the emulsion that have been divided by the cutting will confluence after the cutting.

Mayonnaise is generally known as a thick, creamy sauce that can be used as a condiment with other foods. Mayonnaise is a stable water-continuous emulsion of vegetable oil, egg yolk and either vinegar or lemon juice. In many countries, the term mayonnaise may only be used in case the emulsion conforms to the 'standard of identity', which defines the composition of a mayonnaise. For example, the standard of identity may define a minimum oil level, and a minimum egg yolk amount. Also, mayonnaise-like products having oil levels lower than defined in a standard of identity can be considered to be mayonnaises. These kinds of products often contain thickeners like starch to stabilise the aqueous phase. Mayonnaise may vary in colour, and is generally white, cream-coloured, or pale yellow. The texture may range from of light creamy to thick, and generally mayonnaise is spoonable. In the context of the present invention 'mayonnaise' includes emulsions with vegetable oil levels ranging from 5% to 85% by weight of the product. Mayonnaises in the context of the present invention do not necessarily need to conform to a standard of identity in any country.

In case the composition of the invention is an oil-in-water emulsion, then preferably the composition comprises an oil-in-water emulsifier. The emulsifier serves to disperse oil droplets in the continuous aqueous phase. The preferred oil-in-water emulsion of the invention comprises egg yolk. The presence of egg yolk may be beneficial for taste, emulsification and/or stability of the oil droplets in the composition of the invention. Egg yolk contains phospholipids, which act as emulsifier for the oil droplets. Preferably the concentration of egg yolk in the composition of the invention ranges from 1 % to 8% by weight of the emulsion, more preferred from 2% to 6% by weight of the emulsion. The egg yolk may be added as egg yolk component, meaning largely without egg white. Alternatively, the composition may also contain whole egg, containing both egg white and egg yolk. The total amount of egg yolk in the composition of the invention includes egg yolk that may be present as part of whole egg. Preferably the concentration of phospholipids originating from egg yolk ranges from 0.05% to 1% by weight, preferably from 0.1% to 0.8% by weight of the emulsion.

Part or all of the egg yolk may have been subjected to an enzymatic conversion process using phospholipase. Preferably the phospholipase that is used to treat egg yolk is phospholipase A2. This process leads to split off of fatty acid chains from the phospholipid molecules, and yields enzyme-modified egg yolk. The reaction products of this enzymatic process are retained in the enzyme-modified egg yolk, meaning that the enzyme-modified egg yolk contains fatty acids split off from the phospholipids. A suitable source of enzyme modified egg yolk is 'Heat stabilised egg yolk (92-8)', supplied by Bouwhuis Enthoven (Raalte, the Netherlands). Preferably the concentration of egg yolk which has been modified by treatment with phospholipase ranges from 0.5% to 4% by weight of the composition, preferably from 1% to 4% by weight of the composition.

Preferably the preferred oil-in-water emulsion has a pH ranging from 3 to 5, preferably ranging from 3 to 4.6, preferably from 3 to 4. This pH preferably is measured at 20°C. Suitable acids to obtain that pH are selected from acetic acid, citric acid, lactic acid, malic acid, phosphoric acid, hydrochloric acid, glucono-delta-lactone and combinations thereof. Preferably, the emulsions comprise acetic acid, citric acid or combinations thereof.

Preferably oil droplets dispersed in the preferred oil-in-water emulsion have a surface weighted mean diameter D3,2 of less than 10 micrometer, preferably from 0.3 to less than 10 micrometer, preferably from 0.5 to 8 micrometer, preferably less than 6 micrometer. This mean diameter may suitably be determined using the method described by Goudappel et al. (Journal of Colloid and Interface Science 239, p. 535-542, 2001). Typically, 80 to 100% of the total volume of the oil droplets contained in the composition of the invention have a diameter of less than 15 micrometer, more preferably a diameter ranging from 0.5 to 10 micrometer.

The combination of ingredients in the preferred oil-in-water emulsion has a very significant effect on the rheological properties of the emulsion, e.g. in that it provides an elastic modulus G', measured at 20°C, within the range of 100 to 1,000 Pa, most preferably in the range of 300 to 700 Pa at a strain (deformation) of 1%.

The dynamic viscosity of the preferred oil-in-water emulsion preferably ranges from 0.5 to 30 Pa.s, more preferably from 1 to 10 Pa.s at a shear rate of 50 s⁻¹ and 20°C. The viscosity can be determined using an AR1000 controlled stress rheometer ex TA Instruments (New Castle, DE, USA).

The preferred oil-in-water edible emulsion may suitably contain one or more additional ingredients. Examples of such optional ingredients include thickeners like starches or gums, salt, sugar, spices, vitamins, flavouring, colouring, mustard, herbs and pieces of meat, vegetable or cheese. Such optional additives, when used, collectively, do not make up more than 40%, more preferably not more than 20%, preferably not more than 10% by weight of the composition.

The preferred oil-in-water emulsion may be prepared by any common method in the art. Preferably such method includes the following steps:
(i) mixing water and water-soluble or dispersible ingredients; preferably including emulsifier and acid;
(ii) adding oil to the mixture and dispersing the oil in the mixture;
(iii) optionally homogenising the mixture of step d) to create an oil-in-water emulsion wherein the oil droplets have a surface weighted mean diameter D3,2 of less than 10 micrometer.

The dispersion obtained in step (ii) is further homogenised to create a fine dispersion of oil droplets. The optional homogenisation step (iii) is done during a time period long enough that the dispersed oil phase typically has a mean diameter D3,2 of less than 10 micrometer, preferably from 0.3 to less than 10 micrometer, preferably from 0.5 to 8 micrometer. Preferably the oil droplets of the emulsion obtained in step e) have a volume weighted geometric mean droplet size D3,2 of less than 6 micrometer. The homogenisation may be done using a conventional mixer for preparing oil-in-water emulsions, such as a colloid mill, or another mill as described in WO 02/069737 A2. A suitable supplier of such emulsification equipment is Charles Ross & Son Company, (Hauppauge, New York, USA).

Preferably in the final optional homogenisation step the homogenisation is performed using a colloid mill operating at a rotation rate ranging from 2,000 to 14,000 rpm. In such step the emulsion is pumped through the head of the colloid mill, to be contacted with the rotating elements of that head. The oil droplets are finely dispersed after such homogenisation step having the required size, and a homogeneous emulsion is obtained. The emulsion may be recirculated once or twice over the colloid mill head in order to create the required oil droplet size.

### Water-in-Oil Emulsion

Preferably the food composition of the invention is in the form of a water-in-oil emulsion. Such fat continuous food products are well known in the art and include preferably shortenings comprising a fat phase and margarine comprising a fat phase and an aqueous phase. Margarine traditionally contains about 80% of an edible fat phase, and 20% of an aqueous phase, that is dispersed as small droplets in the continuous edible fat phase. Other examples of water-in-oil emulsions are low-fat spreads, in which the proportion of edible fat phase is lower and aqueous phase is higher than margarine, for example about 10 to 40% edible fat phase and about 60 to 90% aqueous phase. For the purpose of the present invention, margarine includes water-in-emulsions containing from 10 to 80% by weight of fat.

The fat phase of margarine and similar edible fat continuous spreads is often a mixture of liquid oil and structuring fat. The structuring fat serves to structure the fat phase (for example in a shortening as well as in a water-in-oil emulsion) and helps to stabilize the aqueous phase, if present, by forming a fat crystal network. For a margarine or spread, ideally the structuring fat has such properties that it melts or dissolves at mouth temperature upon consumption.

The liquid oil preferably has the same preferred features and preferred origin as disclosed in the context of the preferred oil-in-water emulsion.

The structuring fat may be a single fat or a mixture of different fats. The structuring fat may be of vegetable, animal (e.g. dairy fat) or marine origin. Preferably at least 50 wt% of the structuring fat (based on total amount of structuring fat) is of vegetable origin, more preferably at least 60 wt%, even more preferably at least 70 wt%, still more preferably at least 80 wt%, even still more preferably at least 90 wt% and even still more further preferably at least 95 wt%. Most preferably the structuring fat essentially consists of structuring fat of vegetable origin.

Preferably the natural fat is selected from the group consisting of palm fat, allan blackia, pentadesma, shea butter, coconut oil, soybean oil, rapeseed oil and dairy fat. More preferably the natural fat is selected from the group consisting of palm oil, palm kernel oil, palm oil fraction, palm kernel fraction, coconut oil and dairy fat fraction. Even more preferably the natural fat is selected from the group consisting of palm oil, palm kernel oil, palm oil fraction, palm kernel fraction and coconut oil.

The various fat sources may be fully hardened by full hydrogenation, they may be fractionated, intra-esterified, and/or inter-esterified.

The structuring fat may comprise minor amounts of other components like for example monoglycerides that are naturally present in the fat.

To optimize the structuring capacity and/or impression of the emulsion in the mouth upon consumption, structuring fats having a certain solid fat content are preferred. Therefore, the structuring fat as present in the solid particles preferably has a solid fat content N10 from 50 to 100%, N20 from 26 to 95% and N35 from 5 to 60%. The N-value expresses the solid fat content (SFC) at a certain temperature (in °C).

The structuring fat preferably has a solid fat content N10 selected from the list consisting of 45 to 100%, 55 to 90% and 65 to 85%;
N20 selected from the list consisting of 25 to 80%, 40 to 70% and 45 to 65%;
N35 selected from the list consisting of 0.5 to 60%, 0.5 to 20%, 0.5 to 14%, 15 to 50% and 30 to 45%.

Preferred solid fat content profiles of the structuring fat are:
N10 from 45 to 100%, N20 from 25 to 80% and N35 from 0.5 to 60%;
N10 from 55 to 90%, N20 from 40 to 70% and N35 from 0.5 to 20%;
N10 from 55 to 90%, N20 from 40 to 70% and N35 from 15 to 50%;
N10 from 65 to 85%, N20 from 45 to 65% and N35 from 0.5 to 14%; and
N10 from 65 to 85%, N20 from 45 to 65% and N35 from 30 to 45%.

Generally edible fat continuous food products like for example margarines and similar edible fat continuous spreads are prepared according to known processes that encompass the following steps:
(i) Making a pre-emulsion of an aqueous phase and an edible fat phase. For margarine the fat phase usually contains a mixture of liquid oil (often containing C₁₆-C₁₈ mono- or polyunsaturated fatty acids) and structuring fat (often containing C₁₆-C₁₈ saturated fatty acids).
(ii) The emulsion is heated for pasteurisation, leading to complete melting of the edible fat phase.
(iii) The warm emulsion is cooled under high shear to induce crystallization of the structuring fat to create an emulsion. A fat crystal network is formed to stabilize the resulting emulsion and give the product some degree of firmness. Common equipment in this step is a scraped surface heat exchanger, wherein the wall of the heat exchanger is at a temperature lower than -10°C. The saturated fatty acids crystallise on the cold wall, and these solids are scraped from the wall. The water-in-oil emulsion is formed in this step, leading to a fine dispersion of aqueous phase droplets (size usually smaller than 10 micrometer) in the continuous fat phase. The droplets are stabilised by small saturated fat crystals on the interface of the droplets.
(iv) The crystal network is further modified to produce the desired firmness, confer plasticity and reduce the water droplet size. This step is often done in a tube containing a mixer.
(v) The emulsion is filled in its packaging for further distribution to consumers.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

In order to ensure that the structuring fat is liquid when introduced into the mixing apparatus or before being mixed with the liquid oil phase, preferably in step (ii) the melting temperature is at least 50°C, preferably at least 60°C, preferably at least 70°C, and preferably maximally 90°C. At these temperatures, all crystals of the triacylglycerols have become liquid, there are no nuclei for solidification any more at these melting temperatures.

Preferably the weight ratio between structuring fat and liquid oil ranges from 1:100 to 50:100, preferably from 5:100 to 25:100. This means that the total fat phase of the emulsion preferably comprises from 1% by weight to 50% by weight of structuring fat, and from 50% by weight to 99% by weight of liquid oil. More preferably the total fat phase of the emulsion preferably comprises from 5% by weight to 25% by weight of structuring fat, and consequently from 75% by weight to 95% by weight of liquid oil. With these ratios a fat-continuous emulsion can be produced which has the correct hardness and consistency.

An emulsifier may be comprised in the composition to create a good dispersion of aqueous phase in the fat phase. Preferably the composition of the invention comprises a water-in-oil emulsifier. The emulsifier preferably has a HLB value of lower than 7. The HLB value is the hydrophilic-lipophilic balance, and is a measure for the degree of hydrophilicity or lipophilicity. An emulsifier with a HLB value lower than 10 generally is oil soluble, while an emulsifier with a HLB value higher than 10 generally is water-soluble. Hence preferably an emulsifier having a HLB value of 7 or lower, is mixed with the liquid oil prior to mixing with the other ingredients of the composition of the invention. Preferably, the concentration of the emulsifier is maximally 5% based on the weight of the mixture of liquid oil and emulsifier, preferably maximally 1%, preferably maximally 0.1%, preferably maximally 0.01%. A relatively high emulsifier content may lead to the ability to produce low fat or very low fat water-in-oil emulsions, although a relatively high emulsifier content is not necessary to produce low-fat water-in-oil emulsions.

Preferably the emulsifier comprises a monoglyceride of fatty acid, or a diglyceride of fatty acids. Preferably the emulsifier comprises one or more emulsifiers chosen from the group consisting of saturated monoglycerides, unsaturated monoglycerides, and sugar-fatty acid esters (also known as the 'Spans', e.g. sorbitan monostearate). Preferably the HLB value of the emulsifier is lower than 5, preferably lower than 3, preferably 1. Another preferred emulsifier is lecithin from soyabean, or egg.

The amount of aqueous phase and fat phase in the preferred water-in-oil emulsion may range widely. The fat phase includes the structuring fat and the liquid oil, and preferably an emulsifier as defined before. Preferably the concentration of the fat phase ranges from 5% to 95% based on the weight of the emulsion, preferably from 15% to 50%. The emulsion may comprise a fat phase as a majority phase (for example, a margarine containing about 70 to 80% by weight of fat phase), preferably the emulsion comprises from 10% to 80%, preferably from 15% to 60% fat phase based on the weight of the emulsion. Most preferably though the produced emulsion is a low fat emulsion with a fat content ranging from 15% to 50% by weight, preferably ranging from 18% to 45% by weight of fat phase, preferably ranging from 25% to 45% by weight of fat phase, preferably ranging from 30% to 45% by weight of fat phase. An advantage of the method of the present invention is that low fat spreads (maximally 50% by weight of fat phase) can be produced in a single step.

The aqueous phase is dispersed in small droplets in the continuous fat phase during the mixing in the mixing apparatus. Preferably the D3,3 value of the dispersed aqueous phase droplets is less than 10 micrometer, preferably less than 8 micrometer, preferably less than 6 micrometer. Preferably the D3,3 value of the dispersed aqueous phase droplets is less than 3 micrometer, or even less than 2 micrometer.

Preferably the preferred water-in-oil emulsion has a pH ranging from 4 to 6, preferably ranging from 4 to 5.5, preferably from 4.5 to 5.5. This pH preferably is measured at 20°C. Suitable acids to obtain that pH are selected from acetic acid, citric acid, lactic acid, malic acid, phosphoric acid, hydrochloric acid, glucono-delta-lactone and combinations thereof.

The preferred water-in-oil emulsion may suitably contain one or more additional ingredients. Examples of such optional ingredients include thickeners like starches or gums, salt, sugar, spices, vitamins, flavouring, colouring, herbs, spices. Such optional additives, when used, collectively, do not make up more than 40%, more preferably not more than 20%, preferably not more than 10% by weight of the composition.

### Use of the mixture

In a second aspect, the present invention provides the use of a mixture as defined herein in a food composition comprising vegetable oil comprising mono-unsaturated or poly-unsaturated fatty acids, to reduce the oxidation rate of the vegetable oil. The invention also provides a method to reduce the oxidation rate of vegetable oil comprising mono-unsaturated or poly-unsaturated fatty acids in a food composition, using a mixture as defined herein before.

Preferred aspects indicated in the context of the first or second aspect of the invention are applicable to the third aspect of the invention, mutatis mutandis.

### DESCRIPTION OF FIGURES

*Figure 1*: Oxygen concentration in the headspace as function of time in light mayonnaises from example 2. Legend:
   ● sample 204 (with EDTA)
   ■ sample 205 (no EDTA)
   ▲ sample 207 (no EDTA, containing mixture with the compounds from mixture M1 in example 1)
*Figure 2*: Hexanal concentration in the headspace in accelerated shelf-life test, samples from example 2.
   Legend:
   ● sample 204 (with EDTA)
   ■ sample 205 (no EDTA)
   ▲ sample 207 (no EDTA, containing mixture with the compounds from mixture M1 in example 1)
*Figure 3*: Oxygen concentration in the headspace as function of time in salad dressings from example 3. Legend:
   ● sample 267 (with EDTA)
   ■ sample 268 (no EDTA)
   ▲ sample 269 (no EDTA, containing mixture with the compounds from mixture M1 in example 1)
*Figure 4**:* Oxygen concentration in the headspace as function of time in margarines from example 4. Legend:
   ● sample 028 (no mixture from example 1)
   ▲ sample 029 (containing 0.15% of a mixture with the compounds from mixture M1 in example 1)
   ■ sample 030 (containing 0.2% f a mixture with the compounds from mixture M1 in example 1)

### EXAMPLES

The following non-limiting examples illustrate the present invention.

### Raw Materials

- Water: demineralised water is used in all experiments.
- Soybean oil ex Cargill (Amsterdam, The Netherlands).
- Sunflower oil: ex C Thywissen (Neuss, Germany)
- Rapeseed oil: ex Broekelmann
- Butter oil: Aria Foods
- Palm oil: ex Sime Darby Unimills (Zwijndrecht, Netherlands)
- Interesterified oil: ex Sime Darby Unimills (Zwijndrecht, Netherlands)
- Sucrose: white sugar W4 ex Suiker Unie (Oud Gastel, Netherlands).
- Sorbic acid: ex Univar (Zwijndrecht, Netherlands).
- Salt: NaCl suprasel ex Akzo Nobel (Amersfoort, Netherlands).
- EDTA: Ethylenediaminetetraacetic acid, calcium disodium complex, dehydrate; Dissolvine E-CA-10 ex Akzo Nobel (Amersfoort, Netherlands).
- Liquid egg yolk: 92-8 (8% NaCl), ex Bouwhuis Enthoven (Raalte, Netherlands).
- Liquid egg: pasteurised, ex Bouwhuis Enthoven (Raalte, Netherlands).
- Spirit vinegar: 12% acetic acid vinegar ex Mizkan (UK).
- Lemon juice: concentrate 45°brix ex Döhler (Darmstadt, Germany).
- Xanthan gum: ex Jungbunzlauer
- Modified corn starch: ex Ingredion
- Whey protein concentrate: 80% protein ex Aria Foods
- Lecithin: ex Sime Darby Unimills (Zwijndrecht, Netherlands)
- Beta-carotene: Natural ex Christian Andersen
- Sweet buttermilk powder: ex Lactoland
- Potassium sorbate: ex Merck
- Thymol: Symrise
- Limonene: MCI Miritz
- Gamma-Terpinene: Destillerias Munoz Galvez S.A.
- Carvacrol: Frutarom
- 4-Hydroxy-3,5-dimethoxybenzoic acid: Alfa Aesar
- Carvone; Gallic acid; Gallocatechin; 3-(3,4-dihydroxyphenyl)prop-2-enoic acid; 3-(3,4-dihydroxyphenyl)-2-[3-(3,4-dihydroxyphenyl)prop-2-enoyl]oxy-propionic acid; 4-Hydroxy-3,5-dimethoxybenzoic acid; 3-[3-(3,4-dihydroxy-phenyl)-prop-2-enoyl]oxy-1 ,4,5-trihydroxy-cyclohexane-1-carboxylic acid; Citric acid; Glucose: Sigma-Aldrich
- Benzoic acid: IMCD Deutschland
- Pulegone: Berje Inc.
- Tartaric acid; Malic acid: UD Chemie
- Propylene glycol: Dow

### Methods

*Accelerated shelf-life test to follow lipid oxidation:* Vegetable oil is subjected to conditions which promote oxidation, without requiring the typical shelf life of 4 to 9 months which is normal for a mayonnaise.

Emulsion samples with various compositions are prepared (as described in the examples below) and 1g of each sample is filled in a capped glass vial (20mL volume) and kept in a temperature controlled oven at 50°C. Oxidation experiments are carried out during a period up to 42 days and at several time points a sample is picked for headspace-GC-MS measurement of volatile oxidation markers (e.g. hexanal). Usually every data point is measured in triplo. The measurements are performed on a GC-MS combination of Agilent (7890A/5975C). The GC column used is a DB-Wax (20m-0.18d - 0.3µm) from J&W. The injection volume is 500µL with a split of 40:1 and a column flow of 1 ml/min. Total nine volatiles (mainly aldehydes and alkanes - considered as marker for lipid oxidation) are analysed, of which hexanal is the most important marker, and reported in here. The hexanal response is given in arbitrary units - the higher the response the more hexanal and the more oxidation of triglycerides.

The oxidation of triglycerides occurs in several steps, in which the first step is the most important. This first step is the lag phase, which is the phase where there is not much oxidation, and after this phase the oxidation starts to accelerate. This means that the amount of oxidation products rapidly starts to increase. The longer the lag phase, the slower the oxidation process, and the better the result.

### Oxygen concentration in headspace

To follow oxidation of fatty acids in emulsions in the experiments, the oxygen concentration is measured in the headspace of closed jars in which emulsions are stored to follow oxidation. The lower this concentration, the more oxygen is consumed for oxidation processes. The oxygen content is determined by taking a sample of gas from the headspace with a needle through the closed lid of the jar. The oxygen concentration in the sample is determined by a gas analyser.

### Equipment

- Mixed vessel: temperature controlled mixed vessel (Universal Machine UM-5, ex Stephan Machinery GmbH, Hameln, Germany);
- Colloid mill: MZMNK-7 (Fryma-Maschinen AG, Rheinfelden, Switzerland).

### Example 1. Mixture for use in Food Compositions According to the Invention

The mixture can be used in food compositions according to the invention.

**Table 1 Components in mixture which can be used in food compositions according to the invention**

| **Component** | **M1 [wt%]** | **Class in claim 1** |
|---|---|---|
| Thymol | 0.0011 | a) |
| Limonene | 0.0007 | a) |
| gamma-Terpinene | 0.0003 | a) |
| Carvone | 0.0001 | a) |
| Carvacrol | 0.0001 | a) |
| Gallic acid | 0.0293 | b) |
| 4-Hydroxy-3,5-dimethoxybenzoic acid | 0.0046 | b) |
| Gallocatechin | 0.0053 | i) |
| 3-(3,4-dihydroxyphenyl)prop-2-enoic acid | 0.0061 | c) |
| 3-(3,4-dihydroxyphenyl)-2-[3-(3,4-dihydroxyphenyl)prop-2-enoyl]oxy-propionic acid | 0.5733 | c) |
| Tartaric acid | 2.1510 | d) |
| Citric acid | 1.4377 | e) |
| Malic acid | 1.3670 | e) |
| Glucose | 4.9733 | f) |
| Fructose | 6.4913 | f) |
| Sucrose | 1.1798 | f) |
| Water | 50.6485 | h) |
| Propylene glycol | 31.1305 | g) |

These mixtures are prepared by dissolving the solid compounds in the premixed solvents water and propylene glycol. If necessary, these preparations are slightly heated to maximally 40°C until all compounds are dissolved. Then the other ingredients are added after cooling to room temperature.

### Example 2. Light Mayonnaises

Various low-fat mayonnaises were prepared containing EDTA, without EDTA, and containing a mixture containing the compounds of and at concentrations of M1 in example 1. The compositions of these water-in-oil emulsions is given in Table 2.

**Table 2 Composition of prepared low-fat mayonnaises.**

| | **204** | **205** | **207** |
|---|---|---|---|
| **Ingredient** | **Conc. [wt%]** | **Conc. [wt%]** | **Conc. [wt%]** |
| Salt | 1.5 | 1.5 | 1.5 |
| Sucrose | 2.5 | 2.5 | 2.5 |
| Liquid egg | 4 | 4 | 4 |
| EDTA | 0.0077 | - | - |
| Mixture containing the compounds of M1 in example 1 | - | - | 0.10 |
| Flavour | 0.2 | 0.2 | 0.2 |
| Soybean oil | 23 | 23 | 23 |
| Modified corn starch | 5 | 5 | 5 |
| Lemon juice | 0.5 | 0.5 | 0.5 |
| Spirit vinegar | 2.0 | 2.0 | 2.0 |
| Sorbic acid | 0.1 | 0.1 | 0.1 |
| Water | to 100% | to 100% | to 100% |

| | | | |
|---|---|---|---|
| * small differences may occur due to rounding of the numbers; in all tables in this specification | | | |

These mayonnaises were prepared by the following method:
- Aqueous phase is prepared by heating the corn starch in water with lemon juice and part of the vinegar for 1 min at 90°C;
- Salt, sucrose, egg and the remaining part of the vinegar are added to the part of the aqueous mixture with starch and mixed in a mixed vessel.
- Oil is slowly added and mixed.
- Mixture is pumped through a colloid mill to emulsify the oil.
- Emulsion is mixed with the rest of starch mixture in a mixed vessel, and samples are filled in jars and closed with a lid.

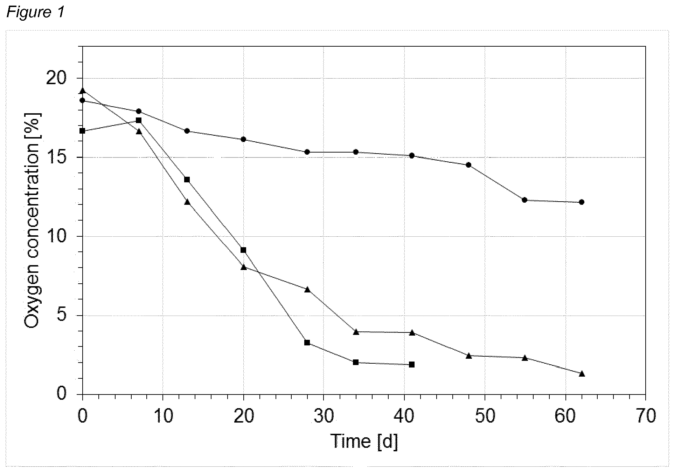

In order to assess oxidation of oil, the oxygen concentration in the headspace in the jars containing the emulsions was followed during a period of about 2 months. The emulsions were stored at a temperature of 20°C. The higher the oxygen concentration, the less the oxidation of the oil. This is shown in Figure 1. The emulsion 204 with EDTA shows least oxidation. The emulsion 207 containing the mixture containing a mixture containing the compounds of and at concentrations of M1 in example 1 shows less oxidation than the emulsion 205 without EDTA. Therefore, this mixture of components can be used to decrease oxidation of vegetable oil in an oil-in-water emulsion, and it can at least partly replace EDTA.

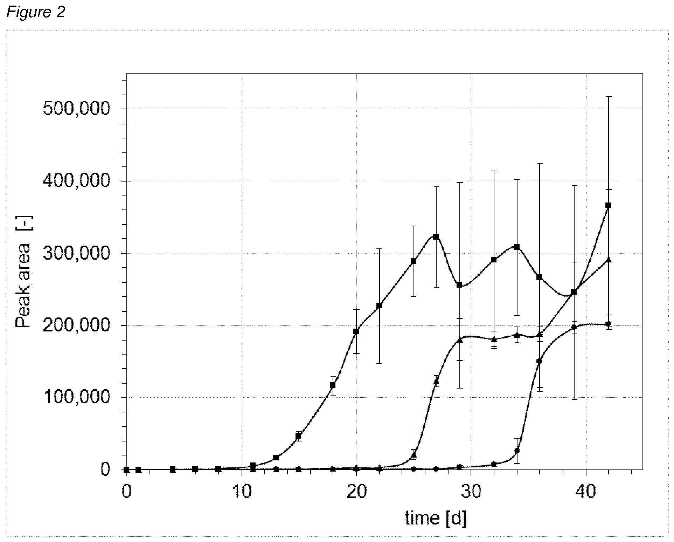

The oxidation of the oil in the emulsions was followed by the accelerated shelf-life test, as described above. Emulsions from Table 2 were stored at 50°C, and samples from the headspace taken as during a time period of about 1.5 months. The hexanal concentration in the headspace is shown in Figure 2. This figure shows that sample 207 containing the mixture containing a mixture containing the compounds of and at concentrations of M1 in example 1 shows that the length of the lag phase is extended as compared to sample 205 without EDTA. Therefore, this mixture of components can be used to decrease oxidation of vegetable oil in an oil-in-water emulsion, and it can at least partly replace EDTA.

### Example 3. Salad Dressings

Various salad dressings were prepared containing EDTA, without EDTA, and containing a mixture containing the compounds of and at concentrations of M1 in example 1. The compositions of these water-in-oil emulsions is given in Table 3.

These salad dressings were prepared by the following method:
- an aqueous mixture containing the corn starch and part of the vinegar is heated for 5 min at 85°C;
- the heated starch mixture is mixed with egg yolk and the other ingredients listed in Table 3, except sunflower oil and mixed in a mixed vessel;
- sunflower oil is slowly added to the mixture, and emulsified using a colloid mill, to create an oil-in-water emulsion. The emulsions are filled in jars and closed with a lid.

**Table 3 Compositions of prepared salad dressings.**

| | **267** | **268** | **269** |
|---|---|---|---|
| **Ingredient** | **Conc. [wt%]** | **Conc. [wt%]** | **Conc. [wt%]** |
| Water | 58 | 58 | 58 |
| Sucrose | 2 | 2 | 2 |
| Salt | 2 | 2 | 2 |
| Spirit vinegar | 3 | 3 | 3 |
| Xanthan gum | 0.5 | 0.5 | 0.5 |
| Modified corn starch | 1 | 1 | 1 |
| Whey protein concentrate, 80% protein | 0.5 | 0.5 | 0.5 |
| Lemon juice | 0.5 | 0.5 | 0.5 |
| EDTA | 0.0070 | - | - |
| Mixture containing the compounds of M1 in example 1 | - | - | 0.1 |
| Liquid egg yolk | 2 | 2 | 2 |
| Flavour and spices | 0.2 | 0.2 | 0.2 |
| Sunflower oil | 30 | 30 | 30 |

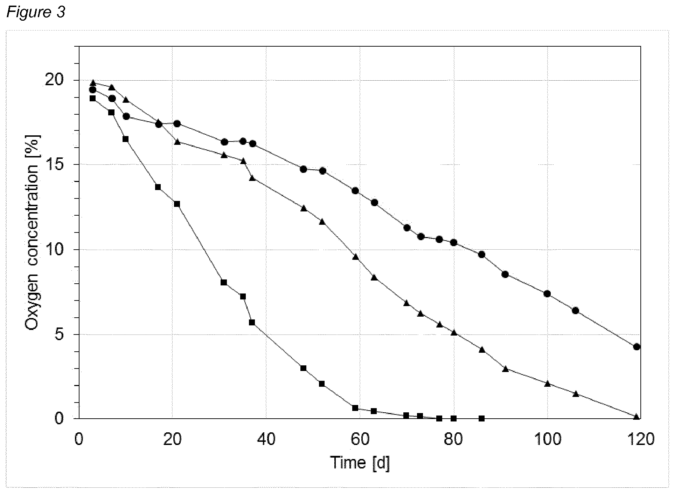

In order to assess oxidation of oil, the oxygen concentration in the headspace of the emulsions was followed during a period of about 4 months. The emulsions were stored in at a temperature of 20°C. The oxygen concentration is shown in Figure 3. The salad dressing 267 with EDTA shows least oxidation. The salad dressing 269 containing a mixture containing the compounds of and at concentrations of M1 in example 1 shows considerably less oxidation than salad dressing 268 without EDTA. Therefore, this mixture of components can be used to decrease oxidation of vegetable oil in an oil-in-water emulsion, and can at least partly replace EDTA.

### Example 4. Margarines

Various margarines were prepared containing a mixture containing the compounds of and at concentrations of M1 in example 1 at two concentrations, and without such mixture. The compositions of these water-in-oil emulsions is given in Table 4.

**Table 4 Compositions of prepared light margarines.**

| | **028** | **029** | **030** |
|---|---|---|---|
| **Ingredient** | **Conc. [wt%]** | **Conc. [wt%]** | **Conc. [wt%]** |
| *Fat phase components* | | | |
| Rapeseed oil | 32 | 32 | 32 |
| Palm oil | 6 | 6 | 6 |
| Butter oil | 18 | 18 | 18 |
| Interesterified oil | 14 | 14 | 14 |
| Lecithin | 0.2 | 0.2 | 0.2 |
| Beta-carotene | 0.0015 | 0.0015 | 0.0015 |

| *Aqueous phase components* | | | |
|---|---|---|---|
| Water | to 100% | to 100% | to 100% |
| Sweet buttermilk powder | 1 | 1 | 1 |
| Salt | 1 | 1 | 1 |
| Potassium sorbate | 0.1 | 0.1 | 0.1 |
| Mixture containing the compounds of M1 in example 1 | - | 0.15 | 0.20 |

These margarines were prepared using a mini-votator containing an A-unit and a C-unit. First the aqueous phase and fat phase were prepared, and heated for pasteurisation. The phases were mixed to prepare a pre-emulsion, and then the pre-emulsions were pumped through the mini-votator. Before emulsification, the pH of the aqueous phase was adjusted to 5 by addition of lactic acid 20%.

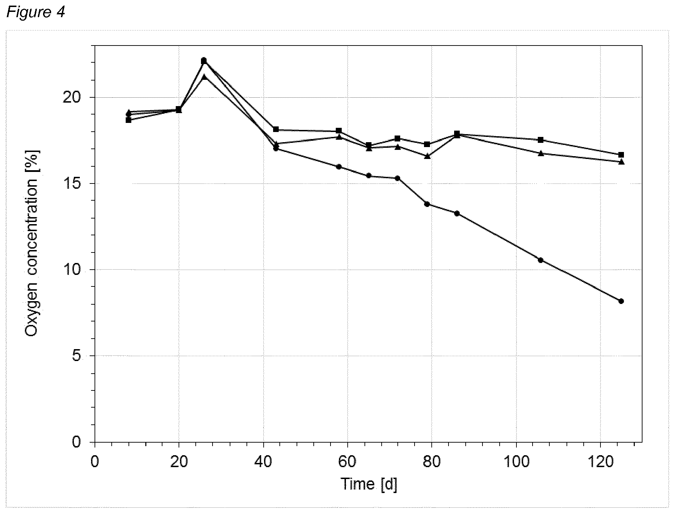

In order to assess oxidation of oil, the oxygen concentration in the headspace of the emulsions was followed during a period of more than 4 months. The emulsions were stored in closed packages at a temperature of 5°C. This is shown in Figure 4.
The light margarine 028 shows the lowest oxygen concentration in the headspace, thus most oxidation of the fatty acids. The sample 030 containing the highest concentration of the mixture containing the compounds of and at concentrations of M1 in example 1 shows least oxidation.
Therefore, this mixture of components can be used to decrease oxidation of vegetable oil in a water-in-oil emulsion.

### Example 5. Mixture for use in Food Compositions According to the Invention

This example provides a mixture M2 for use in a food composition according to the invention, and compares this to mixtures outside the scope of the invention. The mixtures described in table 6 were prepared. These mixtures were tested in an accelerated storage test, in full-fat mayonnaises, with the composition as in table 5. The concentration of the mixtures in the emulsions was 0.1% by weight.

**Table 5 Composition of mayonnaises containing a mixture of compounds (see table 6).**

| **Ingredient** | **Concentration [wt%]** |
|---|---|
| Sunflower oil | 79.2 |
| Water | 8.1 |
| Vinegar 5% | 4.0 |
| Egg yolk, pasteurized | 6.0 |
| Sucrose | 1.5 |
| Salt | 1.0 |
| Mixture of compounds (see table 6) | 0.1 |
| flavour | 0.1 |

For production of the mayonnaises, the water, vinegar, sucrose, salt, a mixture of compounds and flavour were mixed first. Then one third of this mixture was mixed with the egg yolk. To this mixture, the oil was added with a weak jet, slowly in the beginning and faster towards the end, with simultaneous strong emulsification. In between and mainly towards the end, the remaining amount of the mixture of water, vinegar, sucrose, salt, a mixture of compounds and flavour were added between two portions of oil.

**Table 6 Components in mixtures which can be used in food compositions according to the invention and comparative mixtures (see also table 5).**

| | **Class in claim 1** | **M2** *According to invention* | **A** | **B** | **C** |
|---|---|---|---|---|---|
| Thymol | a) | 0.0002 | 0 | 0.0002 | 0.0002 |
| Limonene | a) | 0.1013 | 20 | 0.1155 | 0.1013 |
| gamma-Terpinene | a) | 0.0909 | 0 | 0.1036 | 0.0909 |
| Carvone | a) | 0.0082 | 0 | 0.0094 | 0.0082 |
| Pulegone | a) | 0.0023 | 0 | 0.0026 | 0.0023 |
| Carvacrol | a) | 0.0005 | 0 | 0.0006 | 0.0005 |
| Gallic acid | b) | 0.511 | 1.9 | 0.5827 | 0.511 |
| 4-Hydroxy-3,5-dimethoxybenzoic acid | b) | 0.8722 | 0 | 0.9945 | 0.8722 |
| Benzoic acid | b) | 0.0083 | 0 | 0.0095 | 0.0083 |
| Gallocatechin | i) | 0.3101 | 0 | 0.3536 | 2 |
| 3-(3,4-dihydroxyphenyl)prop-2-enoic acid | c) | 0.021 | 0 | 0.0239 | 0.021 |
| 3-(3,4-dihydroxyphenyl)-2-[3-(3,4-dihydroxyphenyl)prop-2-enoyl]oxy-propionic acid | c) | 1.4211 | 3.5 | 1.6204 | 1.4211 |
| 3-[3-(3,4-dihydroxyphenyl)prop-2-enoyl]oxy-1,4,5-trihydroxy-cyclohexane-1-carboxylic acid | c) | 0.0022 | 0.0022 | 0.0025 | 0.0022 |
| Tartaric acid | d) | 7.701 | 7.701 | 8.7811 | 7.701 |
| Citric acid | e) | 3.8329 | 3.8329 | 4.3705 | 3.8329 |
| Malic acid | e) | 3.9412 | 3.9412 | 4.4940 | 3.9412 |
| Glucose | f) | 5.5 | 5.5 | 0 | 5.5 |
| Fructose | f) | 5.7 | 5.7 | 0 | 5.7 |
| Sucrose | f) | 1.1 | 1.81894 | 0 | 1.1 |
| Water | h) | 25 | 15 | 28.5063 | 25 |
| Propylene glycol | g) | 43.8756 | 31.1038 | 50.0292 | 42.1857 |

| | **Class in claim 1** | **D** | **E** | **F** | |
|---|---|---|---|---|---|
| Thymol | a) | 0.0002 | 0.0002 | 0.0002 | |
| Limonene | a) | 0.1013 | 0.1013 | 0.1013 | |
| gamma-Terpinene | a) | 0.09 | 0.0909 | 0.0909 | |
| Carvone | a) | 0.0082 | 0.0082 | 0.0082 | |
| Pulegone | a) | 0.0023 | 0.0023 | 0.0023 | |
| Carvacrol | a) | 0.0005 | 0.0005 | 0.0005 | |
| Gallic acid | b) | 0.511 | 0.511 | 0.511 | |
| 4-Hydroxy-3,5-dimethoxybenzoic acid | b) | 0.8722 | 0.8722 | 0.8722 | |
| Benzoic acid | b) | 0.0083 | 0.0083 | 0.0083 | |
| Gallocatechin | i) | 0.3101 | 0.3101 | 0.3101 | |
| 3-(3,4-dihydroxyphenyl)prop-2-enoic acid | c) | 0.021 | 0.021 | 0.021 | |
| 3-(3,4-dihydroxyphenyl)-2-[3-(3,4-dihydroxyphenyl)prop-2-enoyl]oxy-propionic acid | c) | 1.4211 | 1.4211 | 1.4211 | |
| 3-[3-(3,4-dihydroxyphenyl)prop-2-enoyl]oxy-1,4,5-trihydroxy-cyclohexane-1-carboxylic acid | c) | 0.0022 | 0.0022 | 0.0022 | |
| Tartaric acid | d) | 7.701 | 0 | 7.701 | |
| Citric acid | e) | 3.8329 | 0 | 3.8329 | |
| Malic acid | e) | 3.9412 | 0 | 3.9412 | |
| Glucose | f) | 5.5 | 5.5 | 0 | |
| Fructose | f) | 5.7 | 5.7 | 35 | |
| Sucrose | f) | 1.1 | 1.1 | 0 | |
| Water | h) | 68.8765 | 25 | 25 | |
| Propylene glycol | g) | 0 | 59.3507 | 21.1756 | |

Samples of the mayonnaises (table 5), each containing one of these mixtures, were stored at 50°C for 7 days in a heating cabinet to follow the oxidation process. The amount of hexanal in the headspace was determined as described above. The results are provided in table 7.

**Table 7 Concentration hexanal (ppb) in the headspace, at the start of oxidation test, and after 7 days at 50°C.**

| **Mixture** | **Hexanal** fresh [ppb] | **Hexanal** 7 d @ 50°C [ppb] | **Increase factor** |
|---|---|---|---|
| **M2** (invention) | 31.6 | 98.5 | 3.1 |
| **A** | 29.7 | 98.6 | 3.3 |
| **B** | 23.9 | 107.0 | 4.5 |
| **C** | 27.5 | 81.8 | 3.0 |
| **D** | 26.6 | 83.4 | 3.1 |
| **E** | 31.2 | 106.3 | 3.4 |
| **F** | 27.7 | 104.8 | 3.8 |

Results can be described as follows.
Mixture **A** contains a high amount of 3-(3,4-dihydroxyphenyl)-2-[3-(3,4-dihydroxyphenyl)prop-2-enoyl]oxy-propionic acid (class c, outside range of claim 1), which is known as an antioxidant. Also the amounts of gallic acid (class b, outside range of claim 1), and limonene (class a) are relatively high, which are also known as antioxidants (see Sainsbury et al. and Wojtunik et al., ibid*.*)*.* With these high amounts of known antioxidants, this mixture did not perform better than mixture M2 according to the invention. This shows that the combination of compounds in the mixture according to the invention provides an antioxidant effect which is more than expected based on its composition. The high amount of limonene additionally leads to an unacceptable flavour to this mixture, which is very citrus fuit-like.

Mixture **B** does not contain fructose, glucose and sucrose (class f). These compounds have no antioxidative capacity and are not known to inhibit degradation of triglycerides or to take a role in stability effects for oil-water emulsion systems. In addition, these substances are not usable for the reduction of undesired sensorial off-notes. Nevertheless, the amount of hexanal is increased, as compared to the emulsion containing mixture M2 according to the invention. Fructose, glucose and sucrose seem to have a positive role in the anti-oxidant effect of this mixture.

Mixture **C** contains gallocatechin (class i) at a high concentration (outside range of claim 1). Gallocatechin is known to be an antioxidant, and in spite of its high concentration, the hexanal formation is about the same as with the mixture M2 of the invention. Therefore the combination of compounds in the mixture of the invention has the same effects on retardation of oxidation at lower concentration of antioxidants, compared to a mixture containing a very high concentration of gallocatechin.

Mixture **D** contains no propylene glycol (class g), which makes this mixture very difficult to handle. The solvent is required in order to be able to mix the mixture with the ingredients of the food products in which the mixture will be incorporated. Without the solvent this may prove to be difficult. The solvent also helps to stabilise the various compounds in the mixture as well as in the emulsion system.

Mixture **E** contains no tartaric acid (class d) and no citric acid and malic acid (class e), which leads to more hexanal formation. These acids are not known for their activity as an anti-oxidant. Therefore they were expected to have not much influence on the formation of hexanal. Nevertheless, omission of these acids leads to more hexanal formation. Therefore the inclusion of these acids is beneficial for the antioxidant activity of the entire mixture of the invention.

Mixture **F** contains fructose (class f) at a very high concentration (higher than in claim 1). This leads to a relatively high concentration of hexanal compared to the mixture of the invention, thus less antioxidant effect of this mixture. As sugars are not known for their anti-oxidant effect, their effect was known to be neutral. However, this experiment shows that a high concentration of fructose leads to an increased oxidation. This means that the mixture of the invention, with the specified concentration amounts for the various compounds shows the required benefit. Additionally, a high sugar concentration may not be beneficial for taste reasons, as such high sugar concentration cannot be used with a broad range of compositions. Also, a high concentration of sugars leads to a high viscosity of the mixture, which makes it less suitable to be mixed with other ingredients.

These experiments show that the entire composition with compounds within the indicated range of concentrations is important to obtain the anti-oxidant effect. Compounds with known antioxidative effect are not necessarily providing increased antioxidative effect when they are simply added to such mixtures in higher concentration. Additionally, the mixture of the invention can be used in a wide range of food compositions.

### Example 6. Mixture for use in Food Compositions According to the Invention and Comparison to Pure Compounds

This example compares the use in mayonnaise of a mixture according to the invention, and single pure compounds. Mayonnaises were prepared similarly as in example 5, one with mixture M2 and the others with single compounds at the same concentration (0.1 wt%). Stability test and analytical testing were performed as described in example 5.

**Table 7 Concentration hexanal (ppb) in the headspace, at the start of oxidation test, and after 7 days at 50°C.**

| **Compound/Mixture in Mayonnaise** | **Class in Claim 1** | **Hexanal** fresh [ppb] | **Hexanal** 7 d @ 50°C [ppb] | **Increase factor** |
|---|---|---|---|---|
| Benzoic acid | b) | 32.7 | 350.6 | 10.7 |
| 3-(3,4-dihydroxyphenyl)prop-2-enoic acid | c) | 24.9 | 234.2 | 9.4 |
| Carvone | a) | 31.0 | 201.4 | 6.5 |
| 3-[3-(3,4-dihydroxyphenyl)prop-2-enoyl]oxy-1,4,5-trihydroxy-cyclohexane-1-carboxylic acid | c) | 27.0 | 277.0 | 10.3 |
| Citric acid | e) | 23.2 | 151.4 | 6.5 |
| Fructose | f) | 32.9 | 334.1 | 10.1 |
| Gallic acid | b) | 24.2 | 216.2 | 8.9 |
| Gallocatechin | j) | 22.4 | 213.0 | 9.5 |
| gamma-Terpinene | a) | 27.9 | 272.2 | 9.8 |
| Glucose | f) | 33.5 | 289.9 | 8.6 |
| Limonene | a) | 39.5 | 242.5 | 6.1 |
| Malic acid | e) | 23.9 | 215.1 | 9.0 |
| Mixture M2 | - | 24.7 | 148.1 | 6.0 |
| Propylene glycol | g) | 31.1 | 292.6 | 9.4 |
| Pulegone | a) | 37.7 | 218.4 | 5.8 |
| 3-(3,4-dihydroxyphenyl)-2-[3-(3,4-dihydroxyphenyl)prop-2-enoyl]oxypropionic acid | c) | 21.9 | 117.8 | 5.4 |
| Sucrose | f) | 34.8 | 292.6 | 8.4 |
| 4-Hydroxy-3,5-dimethoxybenzoic acid | b) | 20.7 | 286.4 | 13.8 |
| Tartaric acid | d) | 23.2 | 201.4 | 8.7 |
| Water | h) | 33.5 | 288.1 | 8.6 |

These results show that the mixture of the invention performs very well in comparison to most of the single compounds. Only limonene, pulegone, and 3-(3,4-dihydroxyphenyl)-2-[3-(3,4-dihydroxyphenyl)prop-2-enoyl]oxy-propionic acid show activity similar to the mixture M2. However, the concentration of these pure compounds is very high for this kind of compounds, and would make them unsuitable for use in food products. The off-taste that they provide is too high for certain food products. E.g. limonene provides a very strong citrus flavour, and 3-(3,4-dihydroxyphenyl)-2-[3-(3,4-dihydroxyphenyl)prop-2-enoyl]oxy-propionic acid in pure form provides a very strong dry herbal, medicinal flavour; and pulegone provides a strong minty and camphor flavour. That makes these pure compounds not suitable to be used at a high concentration. The mixture of the invention solves this by using a combination of compounds, all in relatively low concentrations, and with a good antioxidative potential. Therewith the oxidation of the triglycerides can be effectively retarded, while still having a good-tasting product, that does not have the off-taste associated with the same compounds in high concentrations.

Furthermore, it was surprising that e.g. sugars seem to have an impact on the production of hexanal. Moreover, even though terpenes are known for their stabilizing effect and for some an antioxidative effect is known, the use of terpenes as single substances replacing mixture M5 resulted in increased Hexanal formation.

## Claims

1. A food composition comprising vegetable oil comprising mono-unsaturated and/or poly-unsaturated fatty acids, wherein the concentration of the vegetable oil ranges from 5% to 85% by weight of the composition, further comprising a mixture comprising or consisting of:
a) 0.0001 to 80% by weight of the mixture of one or more monocyclic monoterpenes of formula (I) 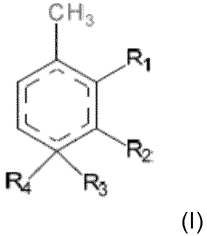 with R1 = hydrogen, hydroxy group or carbonyl group, R2 = hydrogen, hydroxy group or carbonyl group, R3 = 0, hydrogen or hydroxy group and R4 = isopropyl group, isopropenyl group or isopropylidene group as well as without or with one, two or three double bonds in the cyclic system,
preferably selected from the group consisting of gamma-terpinene, alpha-terpinene, beta-terpinene, beta-phellandrene, limonene, thymol, pulegone, carvacrol and alpha-phellandrene,
b) 0.0001 to 1.5% by weight of the mixture of one or more benzoic acid derivatives of formula (II) 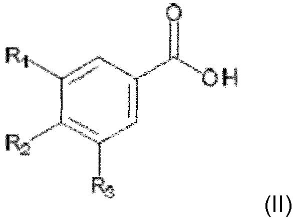 with R1, R2 and R3 independently of each other selected from the group consisting of hydrogen, hydroxy group and methoxy group,
c) 0.0001 to 3% by weight of the mixture of a first 3-phenylpropenoic acid derivative of formula (IV) 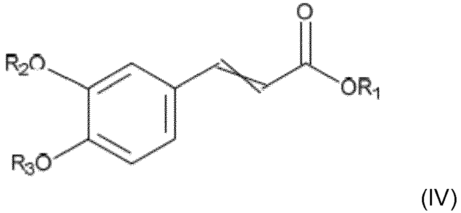 with R1 = 1-carboxy-2-(3,4-dihydroxyphenyl)ethyl, R2 = hydrogen and R3 = hydrogen, optionally a second 3-phenylpropenoic acid derivative of formula (IV) with R1 = 5-carboxy-2,3,5-trihydroxycyclohexyl, R2 = hydrogen and R3 = hydrogen, and
optionally a third 3-phenylpropenoic acid derivative of formula (IV) with R1 = hydrogen, R2 = hydrogen and R3 = hydrogen,
d) 0.005 to 10% by weight of the mixture of tartaric acid (formula (V)) D-(-)-form, and/or L-(+)-form, and/or meso-form 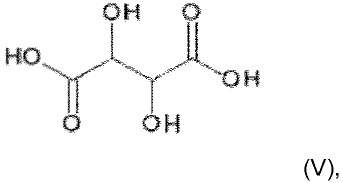
e) 0.005 to 10% by weight of the mixture of citric acid (formula (VI)) and/or malic acid (formula (VII)) 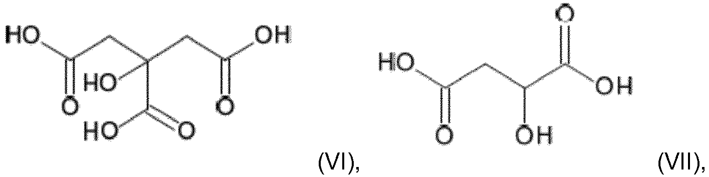
f) 0.000005 to 25% by weight of the mixture of glucose, fructose and/or sucrose,
g) 0.0001 to 98% by weight of the mixture of 1,2-propanediol and/or 1,3-propanediol and/or propane-1,2,3-triol,
h) 0.0005 to 95% by weight of the mixture of water,
i) optionally 0.0001 to 1 wt% by weight of the mixture of gallocatechin (formula (III)) (2R,3S)-3,4-dihydro-2-(3,4,5-trihydroxyphenyl)-2H-1-benzopyran-5 3,5,7-triol 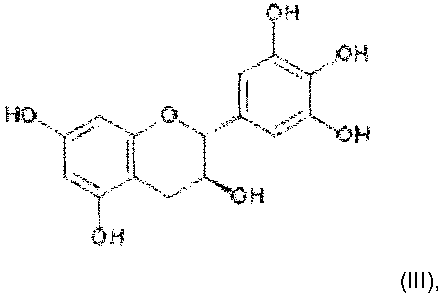
j) optionally 0.005 to 95% by weight of the mixture of one or more further flavouring substances, and
k) optionally 0.01 to 95% by weight of the mixture of one or more further solvents, preferably selected from the group consisting of triacetin (TRI), isopropanol (iPr), isopropyl myristate (IPM), ethanol, dipropylene glycol (DPG) and triethyl citrate (TEC).

2. A composition according to claim 1, wherein the mixture has an ORAC value of greater than 200 µmol TE/g, with respect to the dry weight of the mixture, preferably of greater than 500 µmol TE/g, particularly preferably of greater than 1000 µmol TE/g, especially preferably of greater than 2000 µmol TE/g.

3. A composition according to claim 1 or 2, wherein the mixture has a polyphenol content according to Folin-Ciocalteu of greater than 5%, with respect to the dry weight of the mixture, preferably of greater than 10%, particularly preferably of greater than 15%.

4. A composition according to any of claims 1 to 3, wherein the mixture comprises or consists of, with regard to the total weight of the mixture, respectively,
0.001 to 10 wt% of component a), preferably 0.01 to 5 wt%, especially preferably 0.1 to 1 wt%;
0.001 to 1 wt% of component b), preferably 0.005 to 0.25 wt%, especially preferably 0.01 to 0.1 wt%;
0.001 to 1.5 wt% of component c), preferably 0.005 to 1 wt%, especially preferably 0.01 to 0.7 wt%;
0.0075 to 5 wt% of component d), preferably 0.01 to 3 wt%, especially preferably 0.01 to 0.5 wt%;
0.0075 to 8 wt% of component e), preferably 0.01 to 5 wt%, especially preferably 0.01 to 3 wt%;
0.0000075 to 15 wt% of component f), particularly preferably 0.000001 to 10 wt%, especially preferably 0.00005 to 5 wt%;
0.0005 to 65 wt% of component g), preferably 0.001 to 45 wt%, especially preferably 0.1 to 35 wt%;
0.005 to 65 wt% of component h), preferably 0.01 to 50 wt%, especially preferably 0.05 to 35 wt%;
0.001 to 0.7 wt% of component i), preferably 0.005 to 0.5 wt%, especially preferably 0.01 to 0.15 wt%;
0.0075 to 50 wt% of component j), preferably 0.01 to 25 wt%, especially preferably 0.05 to 15 wt%;
0.05 to 65 wt% of component k), preferably 0.1 to 45 wt%, especially preferably 1 to 35 wt%.

5. A composition according to any of claims 1 to 4, wherein the total amount of mixture in the composition, ranges from 0.05 to 5 wt%, preferably from 0.1 to 3 wt%, preferably from 0.2 to 1 wt%.

6. A composition according to any of claims 1 to 5, wherein the composition is in the form of an oil-in-water emulsion.

7. A composition according to claim 6, wherein the composition comprises an oil-in-water emulsifier, preferably comprises egg yolk.

8. A composition according to any of claims 1 to 4, wherein the composition is in the form of a water-in-oil emulsion.

9. A composition according to claim 8, wherein the composition comprises a water-in-oil emulsifier, preferably comprises a monodiglyceride of fatty acid, or a diglyceride of fatty acids.

10. A composition according to any of claims 1 to 9, wherein the concentration of EDTA is lower than 0.005% by weight, preferably lower than 0.002% by weight of the composition.

11. Use of a mixture comprising or consisting of:
a) 0.0001 to 80% by weight of the mixture of one or more monocyclic monoterpenes of formula (I) 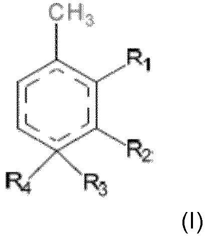 with R1 = hydrogen, hydroxy group or carbonyl group, R2 = hydrogen, hydroxy group or carbonyl group, R3 = 0, hydrogen or hydroxy group and R4 = isopropyl group, isopropenyl group or isopropylidene group as well as without or with one, two or three double bonds in the cyclic system,
preferably selected from the group consisting of gamma-terpinene, alpha-terpinene, beta-terpinene, beta-phellandrene, limonene, thymol, pulegone, carvacrol and alpha-phellandrene,
b) 0.0001 to 1.5% by weight of the mixture of one or more benzoic acid derivatives of formula (II) 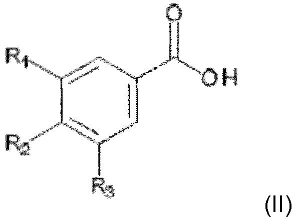 with R1, R2 and R3 independently of each other selected from the group consisting of hydrogen, hydroxy group and methoxy group,
c) 0.0001 to 3% by weight of the mixture of a first 3-phenylpropenoic acid derivative of formula (IV) 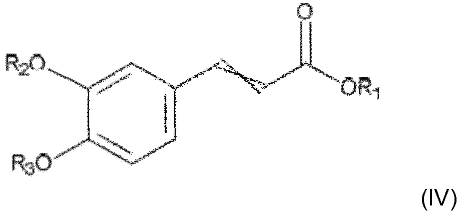 with R1 = 1-carboxy-2-(3,4-dihydroxyphenyl)ethyl, R2 = hydrogen and R3 = hydrogen, optionally a second 3-phenylpropenoic acid derivative of formula (IV) with R1 = 5-carboxy-2,3,5-trihydroxycyclohexyl, R2 = hydrogen and R3 = hydrogen, and
optionally a third 3-phenylpropenoic acid derivative of formula (IV) with R1 = hydrogen, R2 = hydrogen and R3 = hydrogen,
d) 0.005 to 10% by weight of the mixture of tartaric acid (formula (V)) D-(-)-form, and/or L-(+)-form, and/or meso-form 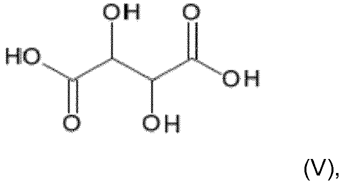
e) 0.005 to 10% by weight of the mixture of citric acid (formula (VI)) and/or malic acid (formula (VII)) 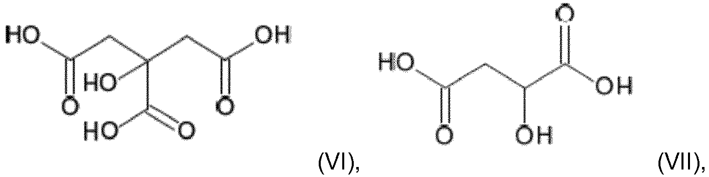
f) 0.000005 to 25% by weight of the mixture of glucose, fructose and/or sucrose,
g) 0.0001 to 98% by weight of the mixture of 1,2-propanediol and/or 1,3-propanediol and/or propane-1,2,3-triol,
h) 0.0005 to 95% by weight of the mixture of water,
i) optionally 0.0001 to 1 wt% by weight of the mixture of gallocatechin (Formula (III)) (2R,3S)-3,4-dihydro-2-(3,4,5-trihydroxyphenyl)-2H-1-benzopyran-5 3,5,7-triol 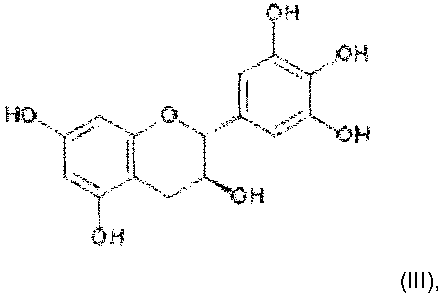
j) optionally 0.005 to 95% by weight of the mixture of one or more further flavouring substances, and
k) optionally 0.01 to 95% by weight of the mixture of one or more further solvents, preferably selected from the group consisting of triacetin (TRI), isopropanol (iPr), isopropyl myristate (IPM), ethanol, dipropylene glycol (DPG) and triethyl citrate (TEC),
in a food composition comprising vegetable oil comprising mono-unsaturated or poly-unsaturated fatty acids, to reduce the oxidation rate of the vegetable oil.

## Patentansprüche

1. Lebensmittelzusammensetzung, umfassend pflanzliches Öl, das einfach ungesättigte und/oder mehrfach ungesättigte Fettsäuren umfasst, wobei die Konzentration des pflanzlichen Öls in dem Bereich von 5 Gewichts-% bis 85 Gewichts-% der Zusammensetzung liegt, ferner umfassend eine Mischung, die umfasst oder besteht aus:
a) 0,0001 bis 80 Gewichts-% der Mischung eines oder der mehrerer monocyclischer Monoterpene der Formel (I) 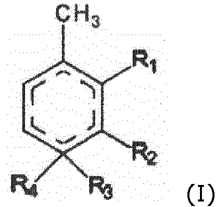 mit R_{1 =} Wasserstoff, Hydroxygruppe oder Carbonylgruppe, R₂ = Wasserstoff, Hydroxygruppe oder Carbonylgruppe, R₃ = 0, Wasserstoff oder Hydroxygruppe und R₄ = Isopropylgruppe, Isopropenylgruppe oder Isopropylidengruppe sowohl ohne als auch mit einer, zwei oder drei Doppelbindungen in dem cyclischen System,
vorzugsweise ausgewählt aus der Gruppe, bestehend aus gamma-Terpinen, alpha-Terpinen, beta-Terpinen, beta-Phellandren, Limonen, Thymol, Pulegon, Carvacrol und alpha-Phellandren,
b) 0,0001 bis 1,5 Gewichts-% der Mischung eines oder mehrerer Benzoesäurederivate der Formel (II) 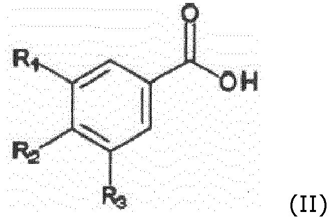 mit R₁, R₂ und R₃ unabhängig voneinander ausgewählt aus der Gruppe, bestehend aus Wasserstoff, Hydroxygruppe und Methoxygruppe,
c) 0,0001 bis 3 Gewichts-% der Mischung eines ersten 3-Phenylpropensäure-Derivats der Formel (IV) 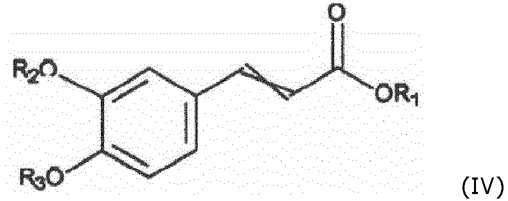 mit R₁ = 1-Carboxy-2-(3,4-dihydroxyphenyl)ethyl, R₂ = Wasserstoff und R₃ = Wasserstoff,
optional eines zweiten 3-Phenylpropensäure-Derivats der Formel (IV) mit R₁ = 5-Carboxy-2,3,5-trihydroxycyclohexyl, R₂ = Wasserstoff und R₃ = Wasserstoff und
optional eines dritten 3-Phenylpropensäure-Derivats der Formel (IV) mit R₁ = Wasserstoff, R₂ = Wasserstoff und R₃ = Wasserstoff,
d) 0,005 bis 10 Gewichts-% der Mischung von Weinsäure (Formel (V)) D-(-)-Form und/oder L-(+)-Form und/oder Meso-Form 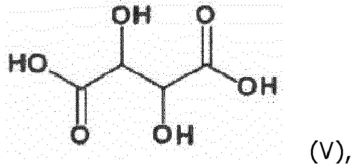
e) 0,005 bis 10 Gewichts-% der Mischung von Citronensäure (Formel (VI)) und/oder Äpfelsäure (Formel (VII) 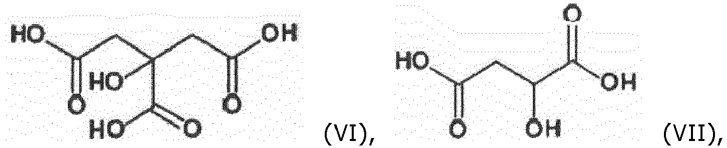
f) 0,000005 bis 25 Gewichts-% der Mischung von Glucose, Fructose und/oder Saccharose,
g) 0,0001 bis 98 Gewichts-% der Mischung von 1,2-Propandiol und/oder 1,3-Propandiol und/oder Propan-1,2,3-triol,
h) 0,0005 bis 95 Gewichts-% der Mischung Wasser,
i) optional 0,0001 bis 1 Gew.-% der Mischung von Gallocatechin (Formel (III)) (2R,3S)-3,4-Dihydro-2-(3,4,5-trihydroxyphenyl)-2H-1-benzopyran-5 3,5,7-triol 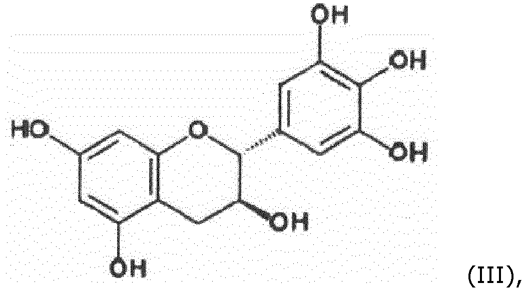
j) optional 0,005 bis 95 Gewichts-% der Mischung eines oder mehrerer weiterer Aromastoffe und
k) optional 0,01 bis 95 Gewichts-% der Mischung eines oder mehrerer weiterer Lösungsmittel, vorzugsweise aus der Gruppe ausgewählt, bestehend aus Triacetin (TRI), Isopropanol (iPr), Isopropylmyristat (IPM), Ethanol, Dipropylenglycol (DPG) und Triethylcitrat (TEC).

2. Zusammensetzung nach Anspruch 1, wobei die Mischung einen ORAC-Wert von größer als 200 µmol TE/g aufweist, bezogen auf das Trockengewicht der Mischung, vorzugsweise größer als 500 µmol TE/g, insbesondere bevorzugt größer als 1000 µmol TE/g, besonders bevorzugt größer als 2000 µmol TE/g.

3. Zusammensetzung nach Anspruch 1 oder 2, wobei die Mischung einen Polyphenolgehalt nach Folin-Ciocalteu von mehr als 5%, bezogen auf das Trockengewicht der Mischung, vorzugsweise mehr als 10%, insbesondere bevorzugt mehr als 15%, aufweist.

4. Zusammensetzung nach irgendeinem der Ansprüche 1 bis 3, wobei die Mischung, in Bezug auf das Gesamtgewicht der Mischung, umfasst bzw. besteht aus
0,001 bis 10 Gew.-% des Bestandteils a), vorzugsweise 0,01 bis 5 Gew.-%, besonders bevorzugt 0,1 bis 1 Gew.-%;
0,001 bis 1 Gew.-% des Bestandteils b), vorzugsweise 0,005 bis 0,25 Gew.-%, besonders bevorzugt 0,01 bis 0,1 Gew.-%;
0,001 bis 1,5 Gew.-% des Bestandteils c), vorzugsweise 0,005 bis 1 Gew.-%, besonders bevorzugt 0,01 bis 0,7 Gew.-%;
0,0075 bis 5 Gew.-% des Bestandteils d), vorzugsweise 0,01 bis 3 Gew.-%, besonders bevorzugt 0,01 bis 0,5 Gew.-%;
0,0075 bis 8 Gew.-% des Bestandteils e), vorzugsweise 0,01 bis 5 Gew.-%, besonders bevorzugt 0,01 bis 3 Gew.-%;
0,0000075 bis 15 Gew.-% des Bestandteils f), insbesondere bevorzugt 0,000001 bis 10 Gew.-%, besonders bevorzugt 0,00005 bis 5 Gew.-%;
0,0005 bis 65 Gew.-% des Bestandteils g), vorzugsweise 0,001 bis 45 Gew.-%, besonders bevorzugt 0,1 bis 35 Gew.-%;
0,005 bis 65 Gew.-% des Bestandteils h), vorzugsweise 0,01 bis 50 Gew.-%, besonders bevorzugt 0,05 bis 35 Gew.-%;
0,001 bis 0,7 Gew.-% des Bestandteils i), vorzugsweise 0,005 bis 0,5 Gew.-%, besonders bevorzugt 0,01 bis 0,15 Gew.-%;
0,0075 bis 50 Gew.-% des Bestandteils j), vorzugsweise 0,01 bis 25 Gew.-%, besonders bevorzugt 0,05 bis 15 Gew.-%;
0,05 bis 65 Gew.-% des Bestandteils k), vorzugsweise 0,1 bis 45 Gew.-%, besonders bevorzugt 1 bis 35 Gew.-%.

5. Zusammensetzung nach irgendeinem der Ansprüche 1 bis 4, wobei die Gesamtmenge der Mischung in der Zusammensetzung in dem Bereich von 0,05 bis 5 Gew.-%, bevorzugt von 0,1 bis 3 Gew.-%, bevorzugt von 0,2 bis 1 Gew.-%, liegt.

6. Zusammensetzung nach irgendeinem der Ansprüche 1 bis 5, wobei die Zusammensetzung in Form einer Öl-in-Wasser-Emulsion vorliegt.

7. Zusammensetzung nach Anspruch 6, wobei die Zusammensetzung einen Öl-in-Wasser-Emulgator, vorzugsweise Eigelb, umfasst.

8. Zusammensetzung nach irgendeinem der Ansprüche 1 bis 4, wobei die Zusammensetzung in Form einer Wasser-in-Öl-Emulsion vorliegt.

9. Zusammensetzung nach Anspruch 8, wobei die Zusammensetzung einen Wasser-in-Öl-Emulgator, vorzugsweise ein Monodiglycerid von Fettsäure oder ein Diglycerid von Fettsäuren umfasst.

10. Zusammensetzung nach irgendeinem der Ansprüche 1 bis 9, wobei die Konzentration von EDTA niedriger als 0,005 Gewichts-%, vorzugsweise niedriger als 0,002 Gewichts-% der Zusammensetzung beträgt.

11. Verwendung einer Mischung, umfassend oder bestehend aus:
a) 0,0001 bis 80 Gewichts-% der Mischung eines oder der mehrerer monocyclischer Monoterpene der Formel (I) 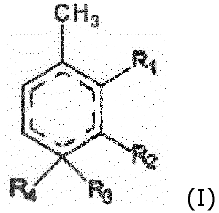 mit R₁ = Wasserstoff, Hydroxygruppe oder Carbonylgruppe, R₂ = Wasserstoff, Hydroxygruppe oder Carbonylgruppe, R₃ = 0, Wasserstoff oder Hydroxygruppe und R₄ = Isopropylgruppe, Isopropenylgruppe oder Isopropylidengruppe sowohl ohne als auch mit einer, zwei oder drei Doppelbindungen in dem cyclischen System,
vorzugsweise ausgewählt aus der Gruppe, bestehend aus gamma-Terpinen, alpha-Terpinen, beta-Terpinen, beta-Phellandren, Limonen, Thymol, Pulegon, Carvacrol und alpha-Phellandren,
b) 0,0001 bis 1,5 Gewichts-% der Mischung eines oder mehrerer Benzoesäurederivate der Formel (II) 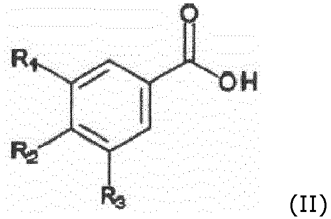 mit R₁, R₂ und R₃ unabhängig voneinander ausgewählt aus der Gruppe, bestehend aus Wasserstoff, Hydroxygruppe und Methoxygruppe,
c) 0,0001 bis 3 Gewichts-% der Mischung eines ersten 3-Phenylpropensäure-Derivats der Formel (IV) 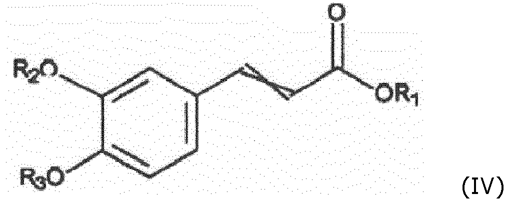 mit R₁ = 1-Carboxy-2-(3,4-dihydroxyphenyl)ethyl, R₂ = Wasserstoff und R₃ = Wasserstoff,
optional eines zweiten 3-Phenylpropensäure-Derivats der Formel (IV) mit R₁ = 5-Carboxy-2,3,5-trihydroxycyclohexyl, R₂ = Wasserstoff und R₃ = Wasserstoff und
optional eines dritten 3-Phenylpropensäure-Derivats der Formel (IV) mit R_{1 =} Wasserstoff, R₂ = Wasserstoff und R_{3 =} Wasserstoff,
d) 0,005 bis 10 Gewichts-% der Mischung von Weinsäure (Formel (V)) D-(-)-Form und/oder L-(+)-Form und/oder Meso-Form 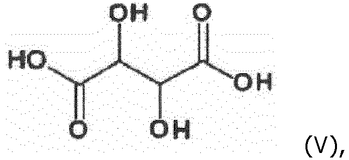
e) 0,005 bis 10 Gewichts-% der Mischung von Citronensäure (Formel (VI)) und/oder Äpfelsäure (Formel (VII) 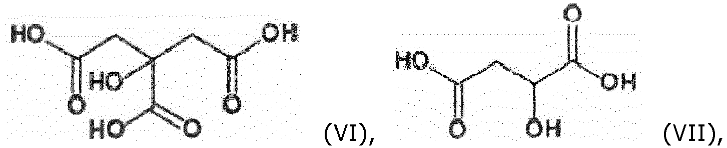
f) 0,000005 bis 25 Gewichts-% der Mischung von Glucose, Fructose und/oder Saccharose,
g) 0,0001 bis 98 Gewichts-% der Mischung von 1,2-Propandiol und/oder 1,3-Propandiol und/oder Propan-1,2,3-triol,
h) 0,0005 bis 95 Gewichts-% der Mischung Wasser,
i) optional 0,0001 bis 1 Gew.-% der Mischung von Gallocatechin (Formel (III)) (2R,3S)-3,4-Dihydro-2-(3,4,5-trihydroxyphenyl)-2H-1-benzopyran-5 3,5,7-triol 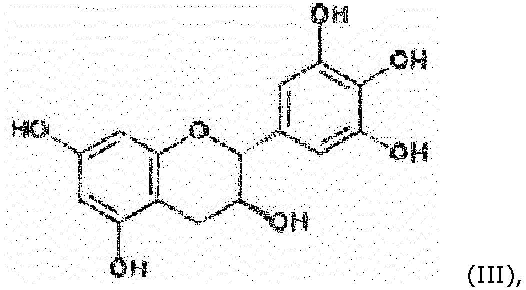
j) optional 0,005 bis 95 Gewichts-% der Mischung eines oder mehrerer weiterer Aromastoffe und
k) optional 0,01 bis 95 Gewichts-% der Mischung eines oder mehrerer weiterer Lösungsmittel, vorzugsweise aus der Gruppe ausgewählt, bestehend aus Triacetin (TRI), Isopropanol (iPr), Isopropylmyristat (IPM), Ethanol, Dipropylenglycol (DPG) und Triethylcitrat (TEC),
in einer Lebensmittelzusammensetzung, umfassend pflanzliches Öl, umfassend einfach ungesättigte oder mehrfach ungesättigte Fettsäuren, um die Oxidationsrate des pflanzlichen Öls zu reduzieren.

## Revendications

1. Composition alimentaire comprenant de l'huile végétale comprenant des acides gras mono-insaturés et/ou poly-insaturés, dans laquelle la concentration de l'huile végétale est de 5 % à 85 % en masse de la composition, comprenant de plus un mélange comprenant ou consistant en :
a) 0,0001 à 80 % en masse du mélange d'un ou plusieurs monoterpènes monocycliques de formule (I) 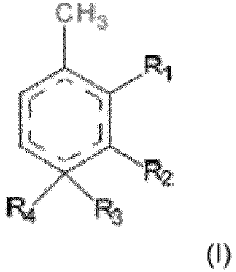 avec R1 = hydrogène, groupe hydroxy ou groupe carbonyle, R2 = hydrogène, groupe hydroxy ou groupe carbonyle, R3 = 0, hydrogène ou groupe hydroxy et R4 = groupe isopropyle, groupe isopropényle ou groupe isopropylidène ainsi que sans ou avec une, deux ou trois doubles liaisons dans le système cyclique,
de préférence choisis dans le groupe consistant en gamma-terpinène, alpha-terpinène, bêta-terpinène, bêta-phéllandrène, limonène, thymol, pulégone, carvacrol et alpha-phéllandrène,
b) 0,0001 à 1,5 % en masse du mélange d'un ou plusieurs dérivés d'acide benzoïque de formule (II) 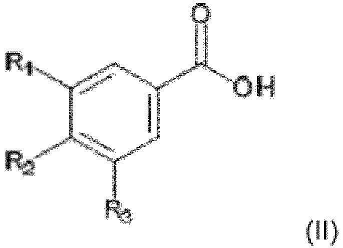 avec R1, R2 et R3 choisis indépendamment l'un de l'autre dans le groupe consistant en hydrogène, groupe hydroxy et groupe méthoxy,
c) 0,0001 à 3 % en masse du mélange d'un premier dérivé d'acide 3-phénylpropénoïque de formule (IV) 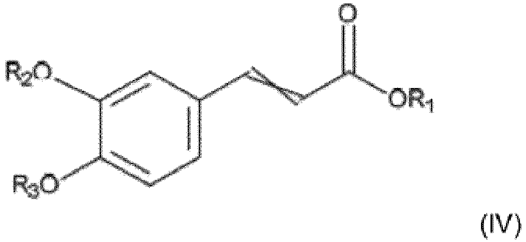 avec R1 = 1-carboxy-2-(3,4-dihydroxyphényl)éthyle, R2 = hydrogène et R3 = hydrogène,
éventuellement un second dérivé d'acide 3-phénylpropénoïque de formule (IV) avec R1 = 5-carboxy-2,3,5-trihydroxycyclohexyle, R2 = hydrogène et R3 = hydrogène, et
éventuellement un troisième dérivé d'acide 3-phénylpropénoïque de formule (IV) avec R1 = hydrogène, R2 = hydrogène et R3 = hydrogène,
d) 0,005 à 10 % en masse du mélange de forme D-(-)-, et/ou forme L-(+)-, et/ou forme méso d'acide tartarique (formule (V)) 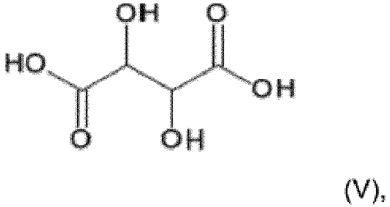
e) 0,005 à 10 % en masse du mélange d'acide citrique (formule (VI)) et/ou d'acide malique (formule (VII)) 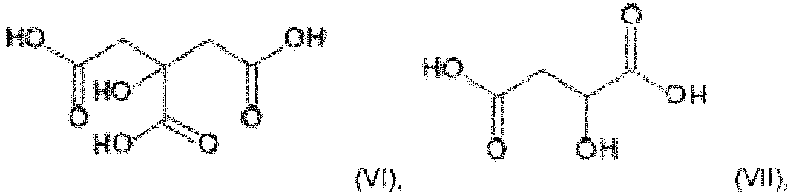
f) 0,000005 à 25 % en masse du mélange de glucose, fructose et/ou saccharose,
g) 0,0001 à 98 % en masse du mélange de 1,2-propanediol et/ou 1,3-propanediol et/ou propane-1,2,3-triol,
h) 0,0005 à 95 % en masse du mélange d'eau,
i) éventuellement de 0,0001 à 1 % en masse du mélange de gallocatéchine (formule (III)) (2R,3S)-3,4-dihydro-2-(3,4,5-trihydroxyphényl)-2H-1-benzopyran-5 3,5,7-triol 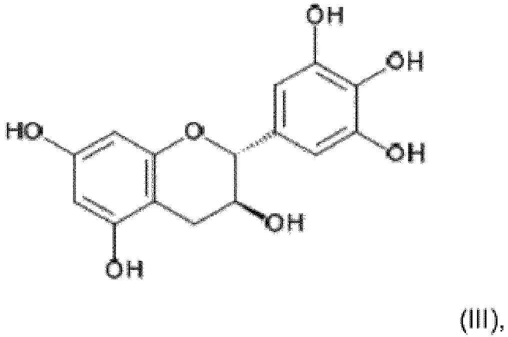
j) éventuellement 0,005 à 95 % en masse du mélange d'une ou plusieurs autres substances aromatisantes, et
k) éventuellement 0,01 à 95 % en masse du mélange d'un ou plusieurs autres solvants, de préférence choisis dans le groupe consistant en triacétine (TRI), isopropanol (iPr), myristate d'isopropyle (IPM), éthanol, dipropylène glycol (DPG) et citrate de triéthyle (TEC).

2. Composition selon la revendication 1, dans laquelle le mélange présente une valeur ORAC supérieure à 200 µmol TE/g, par rapport à la masse sèche du mélange, de préférence supérieure à 500 µmol TE/g, encore mieux supérieure à 1 000 µmol TE/g, particulièrement de préférence supérieure à 2 000 µmol TE/g.

3. Composition selon la revendication 1 ou 2, dans laquelle le mélange présente une teneur en polyphénol selon Folin-Ciocalteu supérieure à 5 %, par rapport à la masse sèche du mélange, de préférence supérieure à 10 %, particulièrement de préférence supérieure à 15 %.

4. Composition selon l'une quelconque des revendications 1 à 3, dans laquelle le mélange comprend ou consiste en, par rapport à la masse totale du mélange, respectivement,
0,001 à 10 % en masse de constituant a), de préférence 0,01 à 5 % en masse, particulièrement de préférence 0,1 à 1 % en masse ;
0,001 à 1 % en masse de constituant b), de préférence 0,005 à 0,25 % en masse, particulièrement de préférence 0,01 à 0,1 % en masse ;
0,001 à 1,5 % en masse de constituant c), de préférence 0,005 à 1 % en masse, particulièrement de préférence 0,01 à 0,7 % en masse ;
0,0075 à 5 % en masse de constituant d), de préférence 0,01 à 3 % en masse, particulièrement de préférence 0,01 à 0,5 % en masse ;
0,0075 à 8 % en masse de constituant e), de préférence 0,01 à 5 % en masse, particulièrement de préférence 0,01 à 3 % en masse ;
0,0000075 à 15 % en masse de constituant f), particulièrement de préférence 0,000001 à 10 % en masse, particulièrement de préférence 0,00005 à 5 % en masse ;
0,0005 à 65 % en masse de constituant g), de préférence 0,001 à 45 % en masse, particulièrement de préférence 0,1 à 35 % en masse ;
0,005 à 65 % en masse de constituant h), de préférence 0,01 à 50 % en masse, particulièrement de préférence 0,05 à 35 % en masse ;
0,001 à 0,7 % en masse de constituant i), de préférence 0,005 à 0,5 % en masse, particulièrement de préférence 0,01 à 0,15 % en masse ;
0,0075 à 50 % en masse de constituant j), de préférence 0,01 à 25 % en masse, particulièrement de préférence 0,05 à 15 % en masse ;
0,05 à 65 % en masse de constituant k), de préférence 0,1 à 45 % en masse, particulièrement de préférence 1 à 35 % en masse.

5. Composition selon l'une quelconque des revendications 1 à 4, dans laquelle la quantité totale de mélange dans la composition, est de 0,05 à 5 % en masse, de préférence de 0,1 à 3 % en masse, de préférence de 0,2 à 1 % en masse.

6. Composition selon l'une quelconque des revendications 1 à 5, dans laquelle la composition est dans la forme d'une émulsion huile-dans-eau.

7. Composition selon la revendication 6, dans laquelle la composition comprend un émulsionnant huile-dans-eau, de préférence du jaune d'œuf.

8. Composition selon l'une quelconque des revendications 1 à 4, dans laquelle la composition est dans la formule d'une émulsion eau-dans-huile.

9. Composition selon la revendication 8, dans laquelle la composition comprend un émulsionnant eau-dans-huile, comprend de préférence un monodiglycéride d'acide gras, ou un diglycéride d'acides gras.

10. Composition selon l'une quelconque des revendications 1 à 9, dans laquelle la concentration d'EDTA est inférieure à 0,005 % en masse, de préférence inférieure à 0,002 % en masse de la composition.

11. Utilisation d'un mélange comprenant ou consistant en :
a) 0,0001 à 80 % en masse du mélange d'un ou plusieurs monoterpènes monocycliques de formule (I) 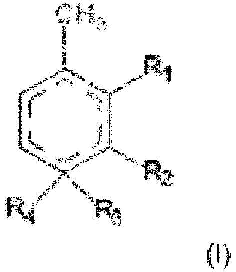 avec R1 = hydrogène, groupe hydroxy ou groupe carbonyle, R2 = hydrogène, groupe hydroxy ou groupe carbonyle, R3 = 0, hydrogène ou groupe hydroxy et R4 = groupe isopropyle, groupe isopropényle ou groupe isopropylidène ainsi que sans ou avec une, deux ou trois doubles liaisons dans le système cyclique,
de préférence choisis dans le groupe consistant en gamma-terpinène, alpha-terpinène, bêta-terpinène, bêta-phéllandrène, limonène, thymol, pulégone, carvacrol et alpha-phéllandrène,
b) 0,0001 à 1,5 % en masse du mélange d'un ou plusieurs dérivés d'acide benzoïque de formule (II) 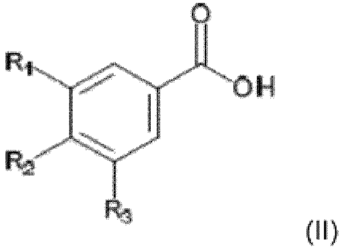 avec R1, R2 et R3 choisis indépendamment l'un de l'autre dans le groupe consistant en hydrogène, groupe hydroxy et groupe méthoxy,
c) 0,0001 à 3 % en masse du mélange d'un premier dérivé d'acide 3-phénylpropénoïque de formule (IV) 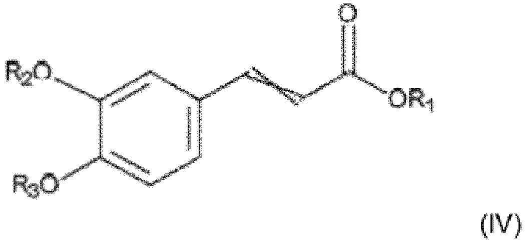 avec R1 = 1-carboxy-2-(3,4-dihydroxyphényl)éthyle, R2 = hydrogène et R3 = hydrogène,
éventuellement un second dérivé d'acide 3-phénylpropénoïque de formule (IV) avec R1 = 5-carboxy-2,3,5-trihydroxycyclohexyle, R2 = hydrogène et R3 = hydrogène, et
éventuellement un troisième dérivé d'acide 3-phénylpropénoïque de formule (IV) avec R1 = hydrogène, R2 = hydrogène et R3 = hydrogène,
d) 0,005 à 10 % en masse du mélange de forme D-(-)-, et/ou forme L-(+)-, et/ou forme méso d'acide tartarique (formule (V)) 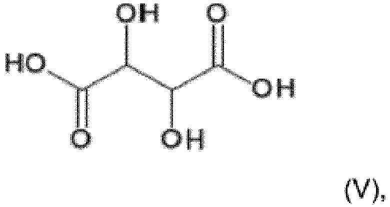
e) 0,005 à 10 % en masse du mélange d'acide citrique (formule (VI)) et/ou d'acide malique (formule (VII)) 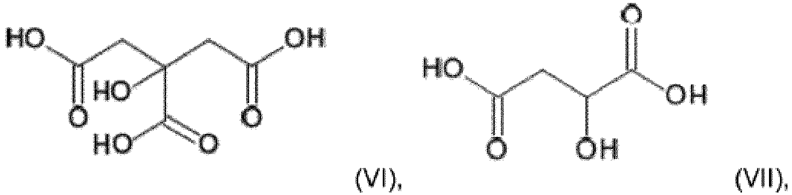
f) 0,000005 à 25 % en masse du mélange de glucose, fructose et/ou saccharose,
g) 0,0001 à 98 % en masse du mélange de 1,2-propanediol et/ou 1,3-propanediol et/ou propane-1,2,3-triol,
h) 0,0005 à 95 % en masse du mélange d'eau,
i) éventuellement de 0,0001 à 1 % en masse en masse du mélange de gallocatéchine (formule (III)) (2R,3S)-3,4-dihydro-2-(3,4,5-trihydroxyphényl)-2H-1-benzopyran-5 3,5,7-triol 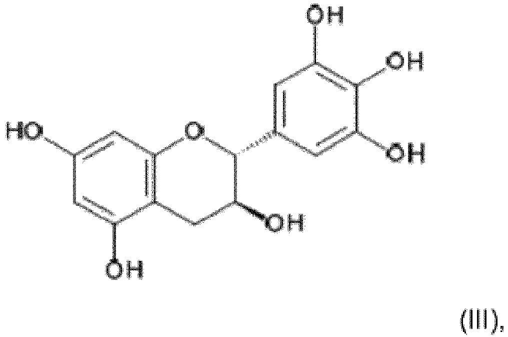
j) éventuellement 0,005 à 95 % en masse du mélange d'une ou plusieurs autres substances aromatisantes, et
k) éventuellement 0,01 à 95 % en masse du mélange d'un ou plusieurs autres solvants, de préférence choisis dans le groupe consistant en triacétine (TRI), isopropanol (iPr), myristate d'isopropyle (IPM), éthanol, dipropylène glycol (DPG) et citrate de triéthyle (TEC),
dans une composition alimentaire comprenant de l'huile végétale comprenant des acides gras mono-insaturés ou poly-insaturés, pour réduire la vitesse d'oxydation de l'huile végétale.
